# EUROPEAN PATENT APPLICATION

(11) **EP 1 650 452 A2**
(43) Date of publication of application: **26.04.2006**
(21) Application number: 05022869.1
(22) Date of filing: 20.10.2005
(51) Int. Cl.: F16D 3/12, F16D 3/66, B62D 1/16, B62D 5/04

(54) **Steering device**

(30) Priority: 25.10.2004 JP 2004310100; 09.03.2005 JP 2005065322
(71) Applicant: NSK LTD., Shinagawa-ku, Tokyo 141-8560 (JP)
(72) Inventor: Segawa, Toru, Tokyo 141-8560 (JP); Eda, Hiroshi, Tokyo 141-8560 (JP); Chikaraishi, Kazuo, Tokyo 141-8560 (JP)
(74) Representative: HOFFMANN EITLE

(57) **Abstract**

A steering device comprises an upper steering shaft (12B), a lower steering shaft (22) for transmitting rotations of the upper steering shaft (12B) to a steering gear (30), an engaging projection (41) provided on a fitted-in portion (40) of the upper shaft (12B), an engaging groove (52) provided on a fitted-in portion (50) of the lower shaft (22) for engaging with the engaging projection (41) with a clearance of a rotational direction and a rotational direction biasing member (60), provided on the fitted-in portion, for giving a biasing force of a rotational direction between the upper and lower steering shafts (12B,22).

## Description

This application is based on Japanese patent applications No. 2004-310100 and No. 2005-065322 filed in Japan, the contents of which are hereby incorporated by reference.

### BACKGROUND OF THE INVENTION

### Field of the Invention

The present invention relates to a steering device and more particularly to a steering device having a coupled portion between an upper steering shaft and a lower steering shaft for transmitting rotations of this upper steering shaft to a steering gear side.

### Description of the Related Art

In the steering device having a steering auxiliary portion for giving a steering auxiliary force proportional to a steering wheel torque of a steering wheel, it is necessary to couple an input shaft of the steering auxiliary portion assembled as an unit to the upper steering shaft so as to be able to transmit rotating torque and to render axial relative movement inoperable.

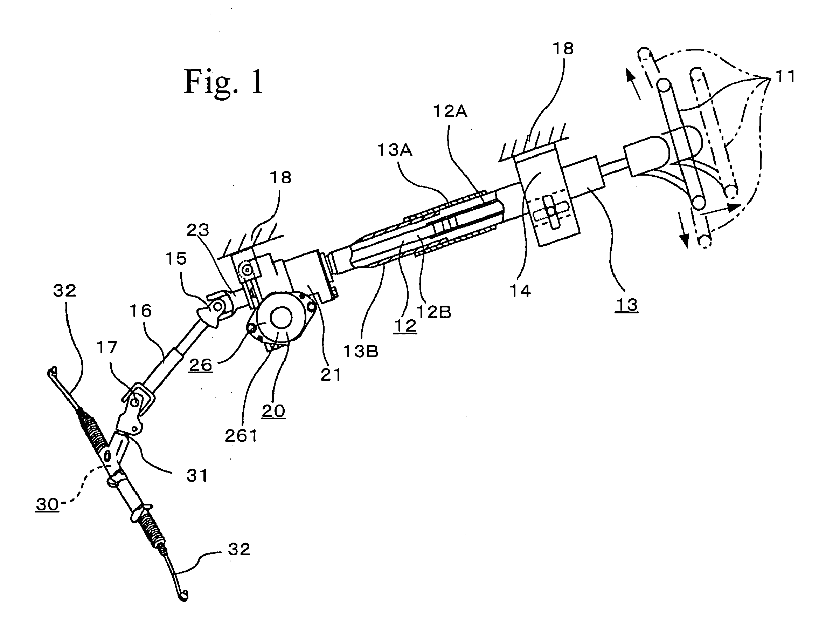

As a steering device having coupled structure with such a steering auxiliary portion, there is a steering device in JP-A No. 313340/2000. Although a conventional steering device is installed to a vehicle body 18, 18 as shown in Fig. 1 of the present application, if there are discrepancy of positions of the vehicle body 18, 18, poor adjustment or the like, an unreasonable force will be applied to a steering column 13 or a gear housing 21 of the steering auxiliary portion to bend the steering shaft 12.

Since when a steering shaft 12 is bent, a force for prying a bearing which axially supports the steering shaft 12 is exerted, there may be caused adverse effects such as an operation of the steering wheel 11 becoming heavier or operating torque of the steering wheel 11 fluctuating. Also, even when the steering shaft 12 itself has a bending due to a manufacturing error, a malfunction similar to the foregoing may occur.

Also, as a steering device having coupling structure between the motor shaft of a steering auxiliary portion and a worm shaft, there is a steering device in JP-A No. 80529/2001. In the steering device of JP-A No. 80529/2001, since the motor shaft and the worm shaft have been coupled using a power
transmission joint in order to absorb misregistration between the motor shaft and the worm shaft, the axial installation dimension becomes longer, and it has become inconvenient to arrange within a narrow vehicle compartment. Further, in a coupled portion of any shaft constituting the steering device, if there is discrepancy of positions or poor adjustment between shafts to be coupled, an unreasonable force will be applied to a bearing or a shaft, a defect such as the operation becoming heavier or causing abnormal noise or vibrations has occurred.

### SUMMARY OF THE INVENTION

It is an object of the present invention to provide a steering device in which a coupling operation between an upper steering shaft, a lower steering shaft or a shaft at any position constituting the steering device is easy to perform, a load on the bearing has been reduced and the manufacturing costs of the parts have been reduced by eliminating backlash in the coupled portion after the coupling and absorbing run-out of the shafts.

The above-described problem is solved by the following means. That is, a first invention is a steering device characterized by comprising: an upper steering shaft; a lower steering shaft for transmitting rotations of the upper steering shaft to a steering gear; an engaging projection provided on either of fitted-in portions between the upper steering shaft and the lower steering shaft; an engaging groove, provided on any other fitted-in portion between the upper steering shaft and the lower steering shaft, for engaging with the engaging projection with a clearance of a rotational direction; and a rotational direction biasing member, provided on the fitted-in portion, for giving a biasing force of a rotational direction between the upper steering shaft and the lower steering shaft.

In addition to a steering device according to the first aspect, according to a second aspect of the present invention, the engaging groove engages with the engaging projection further with a clearance in a radial direction; and the rotational direction biasing member further gives a biasing force in a radial direction between the upper steering shaft and the lower steering shaft.

In addition to a steering device according to the first or second aspect, according to a third aspect of the present invention, the plural engaging projections are provided on the circumference of the fitted-in portion.

According to a fourth aspect of the present invention, a steering device includes: an upper steering shaft; a lower steering shaft for transmitting rotations of the upper steering shaft to a steering gear; engaging grooves provided on both the upper steering shaft and the lower steering shaft on fitted-in portions between the upper steering shaft and the lower steering shaft; a rotating torque transmission member inserted to extend over the both engaging grooves, for engaging with the engaging grooves with a clearance in a rotational direction; and a rotational direction biasing member provided on the fitted-in portion, for giving a biasing force of a rotational direction between the upper steering shaft and the lower steering shaft.

In addition to a steering device according to the fourth aspect, according to a fifth aspect of the present invention, the rotating torque transmission member further engages with the engaging grooves with a clearance in a radial direction; and the rotational direction biasing member further gives a biasing force in a radial direction between the upper steering shaft and the lower steering shaft.

In addition to a steering device according to either the fourth or the fifth aspect, according to a sixth aspect of the present invention, a plurality of the rotating torque transmission members are provided on the circumference of the fitted-in portion.

In addition to a steering device according to the fourth or the fifth aspect, according to a seventh aspect of the present invention, the rotating torque transmission members are either pins or spheres.

In addition to a steering device according to the first, the second, the fourth or the fifth aspect, according to an eighth aspect of the present invention, a steering device is characterized by including: an axial direction biasing member provided on fitted-in portions between the upper steering shaft and the lower steering shaft, for giving a biasing force in an axial direction between the upper steering shaft and the lower steering shaft.

In addition to a steering device according to the first, the second, the fourth or the fifth aspect, according to a ninth aspect of the present invention, the lower steering shaft is the input shaft of a steering auxiliary portion for giving a steering auxiliary force proportional to steering wheel torque of the steering wheel.

In addition to a steering device according to the first, the second, the fourth or the fifth aspect, according to a tenth aspect of the present invention, the steering device includes a movement regulating member, provided on a fitted-in portion between the upper steering shaft and the lower steering shaft, for regulating relative movement in an axial direction between the upper steering shaft and the lower steering shaft.

In addition to a steering device according to the tenth aspect, according to an eleventh aspect of the present invention, the movement regulating member has annular grooves provided on both the upper steering shaft and the lower steering shaft in the fitted-in portion; and an annular regulating member for engaging with the both annular grooves to regulate relative movement in an axial direction between the upper steering shaft and the lower steering shaft.

In addition to a steering device according to the eleventh aspect, according to a twelfth aspect of the present invention, the annular regulating member is either a wire ring or an O-ring.

According to a thirteenth aspect of the present invention, a steering device includes: a motor shaft for generating auxiliary steering wheel torque corresponding to the steering wheel torque; a worm shaft for reducing rotations of the motor shaft to transmit to the steering gear; an engaging projection provided on either of fitted-in portions between the motor shaft and the worm shaft; an engaging groove provided on any other fitted-in portion between the motor shaft and the worm shaft, for engaging with the engaging projection with a clearance of a rotational direction; and a rotational direction biasing member provided on the fitted-in portion, for giving a biasing force of a rotational direction between the motor shaft and the worm shaft.

According to a fourteenth aspect of the present invention, a steering device is characterized by including: a motor shaft for generating auxiliary steering wheel torque corresponding to the steering wheel torque; a worm wheel for reducing rotations of the motor shaft for transmission; a pinion shaft for transmitting rotations of the worm wheel to a rack; an engaging projection provided on either of fitted-in portions between the worm wheel and the pinion shaft; an engaging groove provided on any other fitted-in portion between the worm wheel and the pinion shaft, for engaging with the engaging projection with a clearance of a rotational direction; and a rotational direction biasing member provided on the fitted-in portion, for giving a biasing force of a rotational direction between the worm wheel and the pinion shaft.

In addition to a steering device according to the first, the second, the fourth, the fifth, thirteenth or the fourteenth aspect, according to a fifteenth aspect of the present invention, a plurality of the rotational direction biasing members are provided on the circumference of the fitted-in portion.

In addition to a steering device according to the fifteenth aspect, according to a sixteenth aspect of the present invention, the rotational direction biasing member is constructed of plural hollow cylindrical springs.

In addition to a steering device according to the fifteenth aspect, according to a seventeenth aspect of the present invention, the rotational direction biasing member is constructed of a piece of leaf spring.

In addition to a steering device according to the seventeenth aspect, according to an eighteenth aspect of the present invention, the above-described one piece of leaf spring is used as both a biasing member in the axial direction for giving the biasing force in the axial direction and a movement regulating member for regulating the movement in the axial direction.

In addition to a steering device according to the seventeenth aspect, according to a nineteenth aspect of the present invention, the above-described one piece of leaf spring has been molded using elastomer material.

n addition to a steering device according to the seventeenth aspect, according to a twentieth aspect of the present invention, the above-described one piece of leaf spring has been obtained by integral molding of spring steel and elastomer material.

A steering device according to the present invention has an engaging projection on either of fitted-in portions between the upper steering shaft and the lower steering shaft; an engaging groove for engaging with this engaging projection with a clearance of a rotational direction on the other fitted-in portion; and a biasing member, on this fitted-in portion, for giving a biasing force of a rotational direction between the upper steering shaft and the lower steering shaft.

Since there is a clearance between the engaging projection and the engaging groove, it is possible to easily install the upper steering shaft to the lower steering shaft, and it becomes possible to eliminate looseness between the engaging projection and the engaging groove. Since it is possible to absorb run-out of the steering shaft, the load on a bearing for axially supporting the steering shaft is reduced.

Also, when the movement regulating member provided on the fitted-in portion causes the upper steering shaft and the lower steering shaft to fit in with each other, a relative axial movement between the upper steering shaft and the lower steering shaft is regulated. Therefore, it becomes possible to shorten the assembly time period. Further, since the upper steering shaft and the lower steering shaft are caused to be directly fitted in and are coupled, it is possible to shorten the axial installation dimension.

Other objects and advantages besides those discussed above shall be apparent to those skilled in the art from the description of a preferred embodiment of the invention which follows. In the description, reference is made to accompanying drawings, which form a part thereof, and which illustrate an example of the invention. Such example, however, is not exhaustive of various embodiments of the invention, and therefore reference is made to the claims which follow the description for determining the scope of the invention.

### BRIEF DESCRIPTION OF THE DRAWINGS

The accompanying drawings, which are incorporated in and constitute a part of the specification, illustrate embodiments of the invention and together with the description, serve to explain the principles of the invention, in which:

Fig. 1 is a partially exploded front view showing the entire steering device according to the present invention, and shows an embodiment in which it has been applied to a motor-driven steering device;

Fig. 2 is a longitudinal cross section showing principal part of Fig. 1;

Fig. 3 (1) and Fig. 3 (2) show a coupled portion of a steering shaft according to a first embodiment of the present invention: Fig. 3(1) is a longitudinal cross section showing the coupled portion, and Fig. 3(2) is a sectional view taken on line A-A of Fig. 3(1);

Fig. 4(1) is a sectional view taken on line A-A of Fig. 3(1) showing an input shaft;

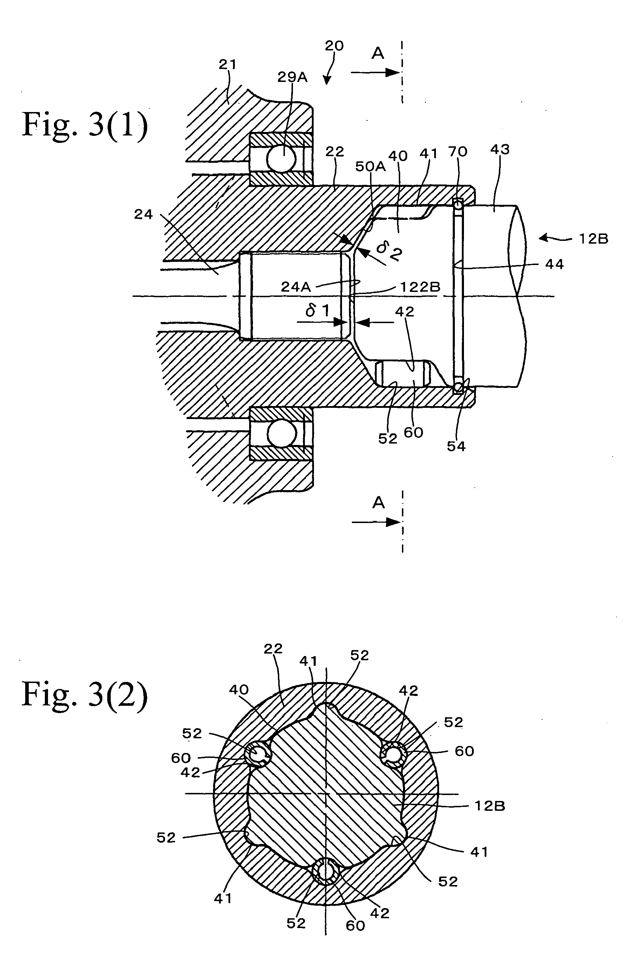

[ig. 4(2) is a sectional view taken on line A-A of Fig. 3(1) showing a spring;

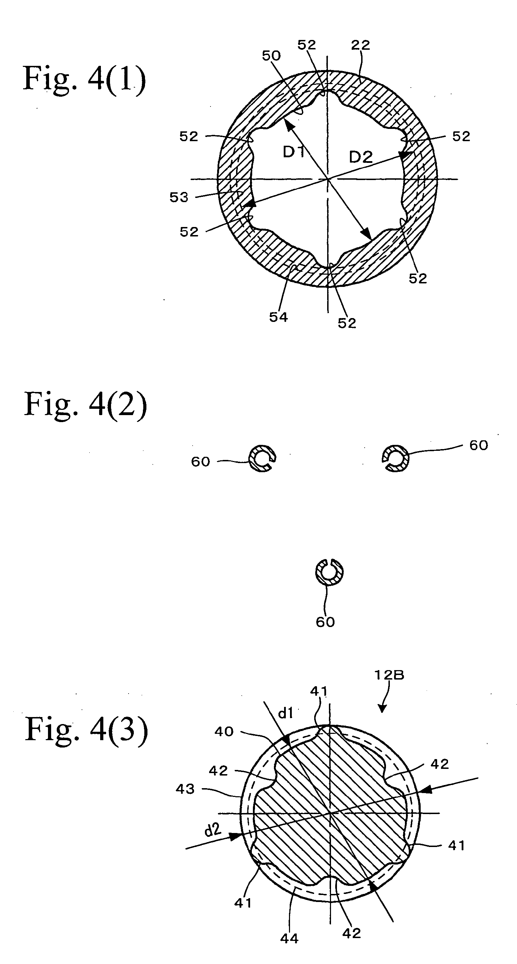

Fig. 4(3) is a sectional view taken on line A-A of Fig. 3(1) showing an inner shaft;

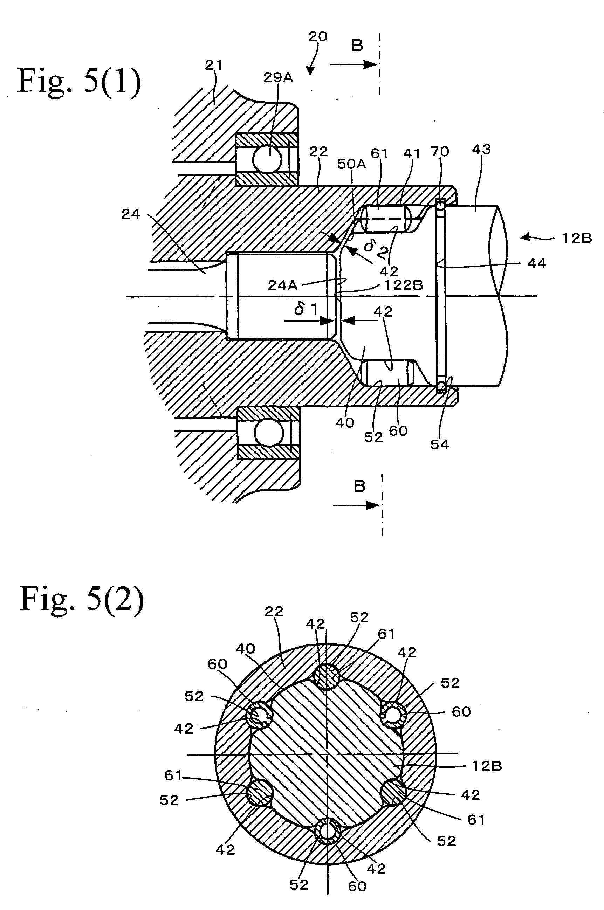

Fig. 5 (1) and Fig. 5(2) show the coupled portion of the steering shaft according to a second embodiment of the present invention: Fig. 5(1) is a longitudinal cross section showing the coupled portion, and Fig. 5(2) is a sectional view taken on line B-B of Fig. 5(1);

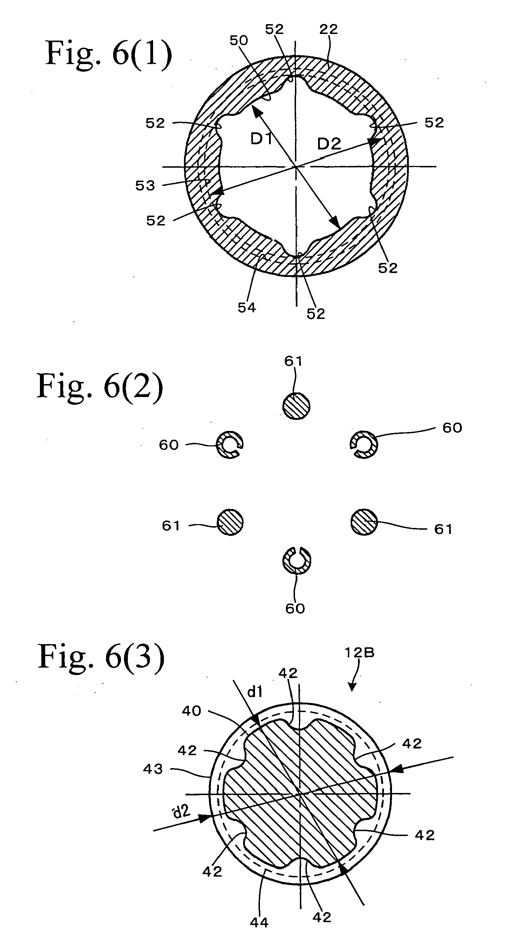

Fig. 6(1) is a sectional view taken on line B-B of Fig. 5(1) showing the input shaft;

Fig. 6(2) is a sectional view taken on line B-B of Fig. 5(1) showing a spring and a pin;

Fig. 6(3) is a sectional view taken on line B-B of Fig. 5(1) showing an inner shaft;

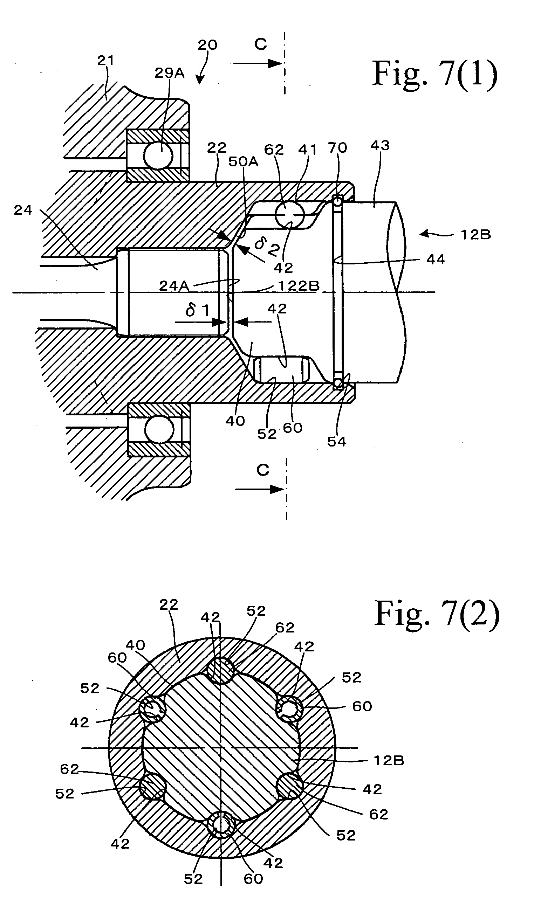

Fig. 7 (1) and Fig. 7 (2) show the coupled portion of the steering shaft according to a third embodiment of the present invention; Fig. 7(1) is a longitudinal cross section showing the coupled portion; and Fig. 7(2) is a cross section taken on line C-C of Fig. 7(1);

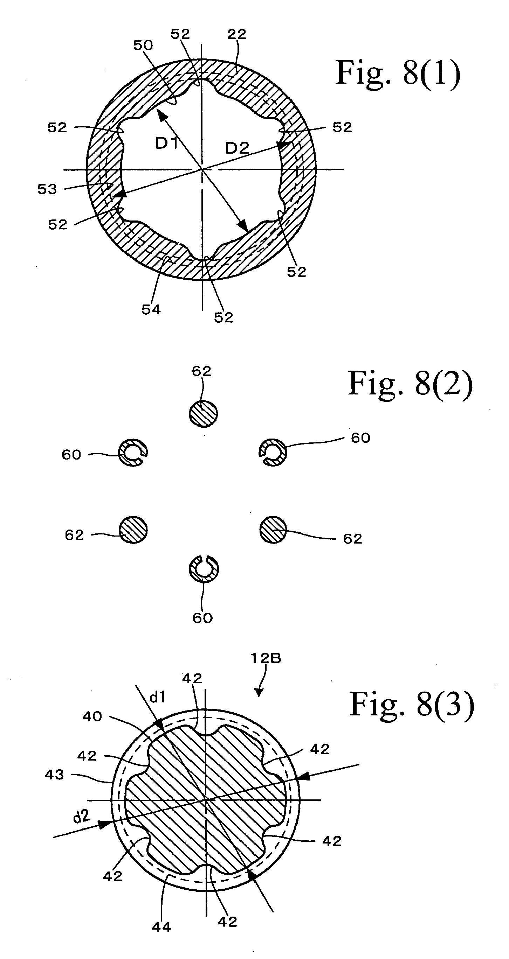

Fig. 8 (1) is a cross section taken on line C-C of Fig. 7(1) showing the input shaft;

Fig. 8 (2) is a cross section taken on line C-C of Fig. 7(1) showing a spring and a sphere;

Fig. 8 (3) is a cross section taken on line C-C of Fig. 7(1) showing the inner shaft;

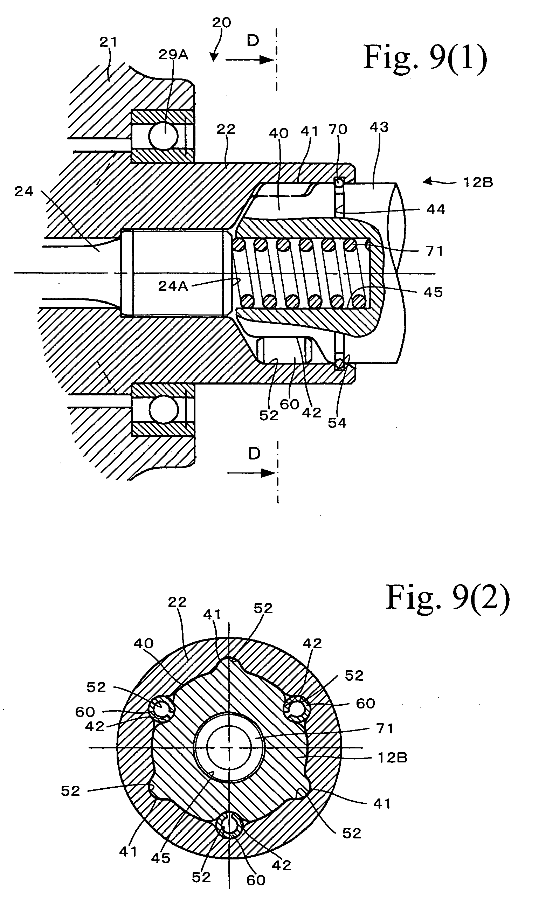

Fig. 9(1) and Fig. 9(2) show the coupled portion of the steering shaft according to a fourth embodiment of the present invention; Fig. 9(1) is a longitudinal cross section showing the coupled portion; and Fig. 9(2) is a cross section taken on line D-D of Fig. 9(1);

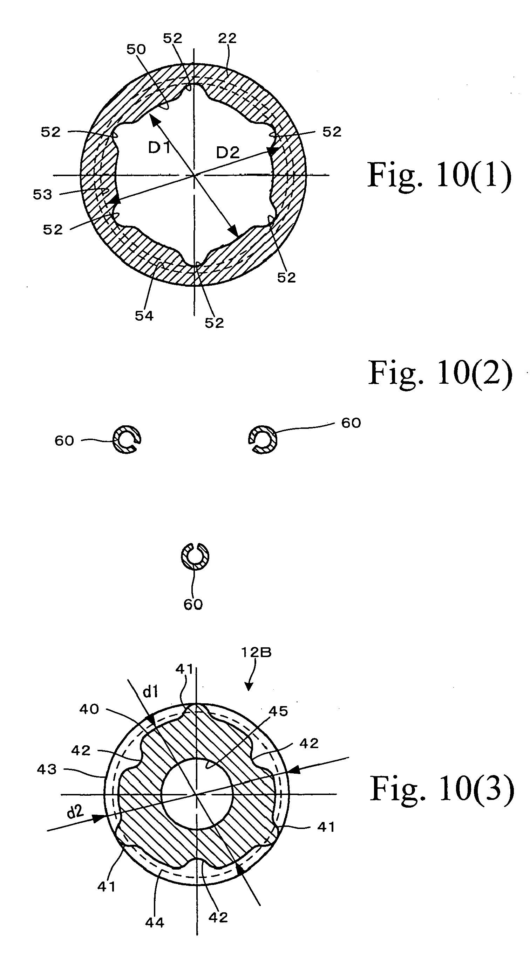

Fig. 10(1) is a cross section taken on line D-D of Fig. 9(1) showing the input shaft;

Fig. 10(2) is a cross section taken on line D-D of Fig. 9(1) showing the spring;

Fig. 10(3) is a cross section taken on line D-D of Fig. 9(1) showing the inner shaft;

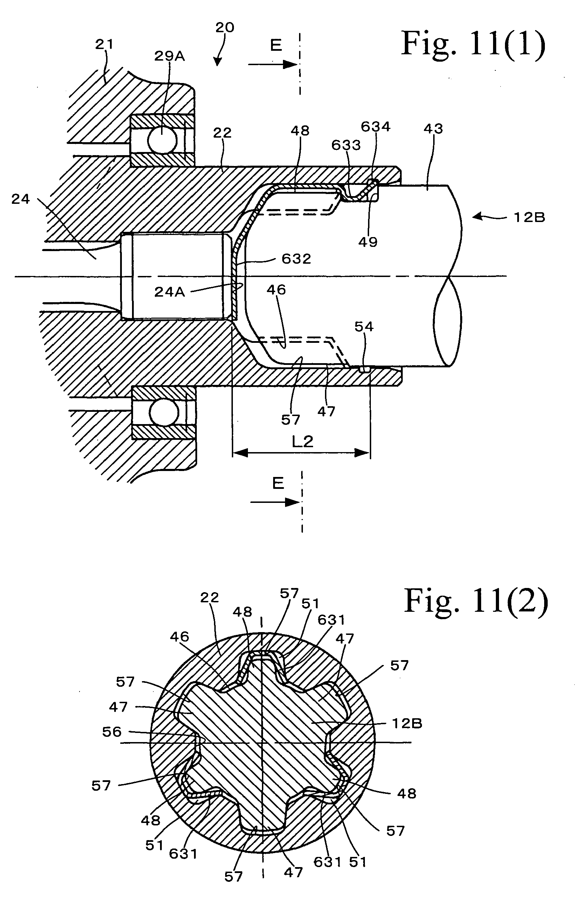

Fig. 11(1) and Fig. 11(2) show the coupled portion of the steering shaft according to a fifth embodiment of the present invention; Fig. 11 (1) is a longitudinal cross section showing the coupled portion; and Fig. 11 (2) is a cross section taken on line E-E of Fig. 11 (1);

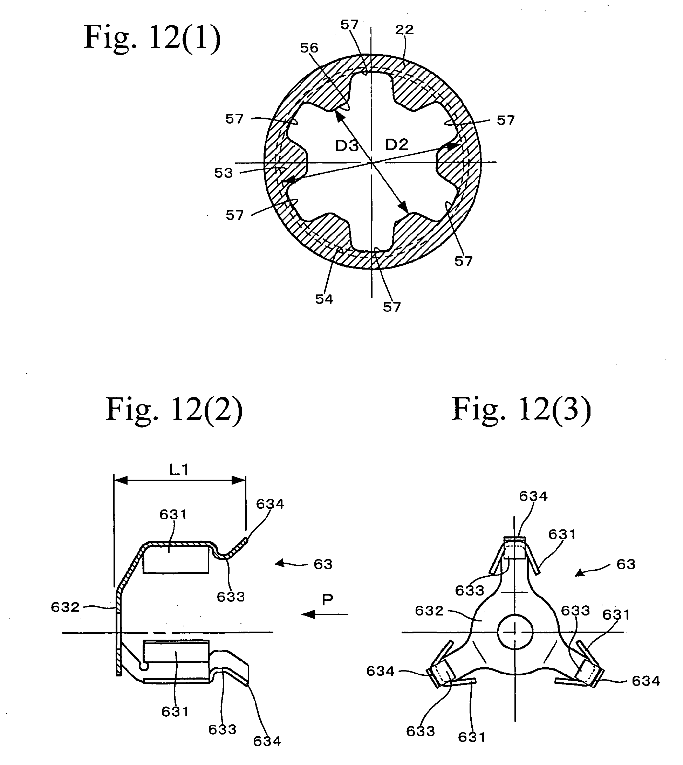

Fig. 12(1) is a cross section taken on line E-E of Fig. 11(1) showing the input shaft;

Fig. 12(2) is a longitudinal cross section showing a leaf spring; and Fig. 12(3) is an arrow view as viewed in the direction of P of Fig. 12(2);

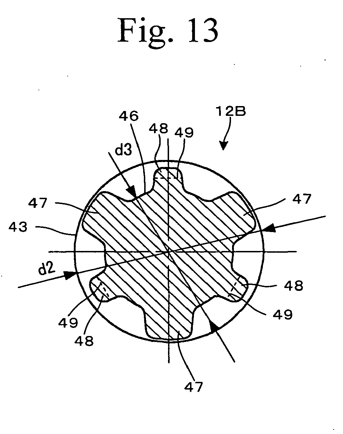

Fig. 13 is a cross section taken on line E-E of Fig. 11 (1) showing the inner shaft;

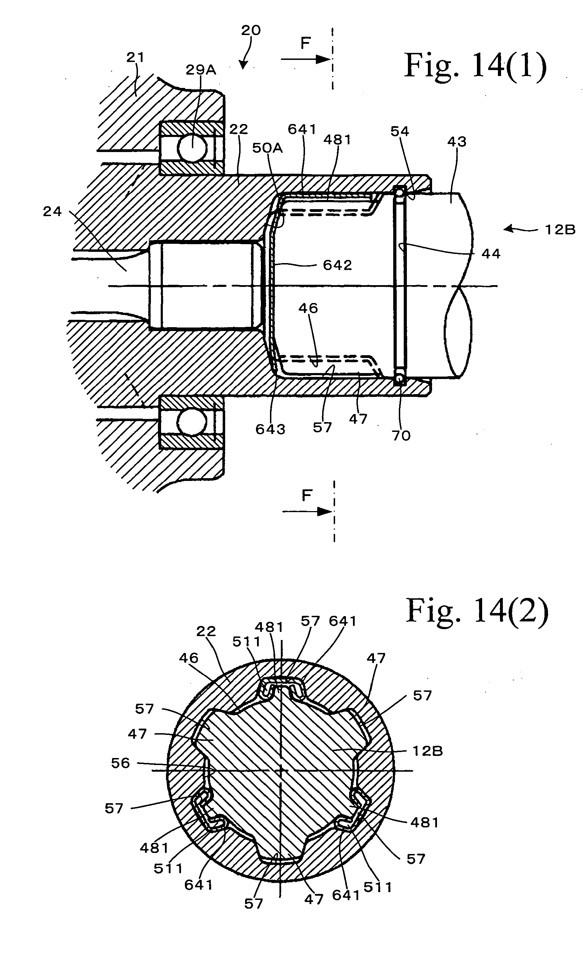

Fig. 14(1) and Fig. 14(2) show a coupled portion of a steering shaft according to a sixth embodiment of the present invention, Fig. 14 (1) is a longitudinal cross section showing the coupled portion, and Fig. 14 (2) is a sectional view taken on line E-E of Fig. 14(1);

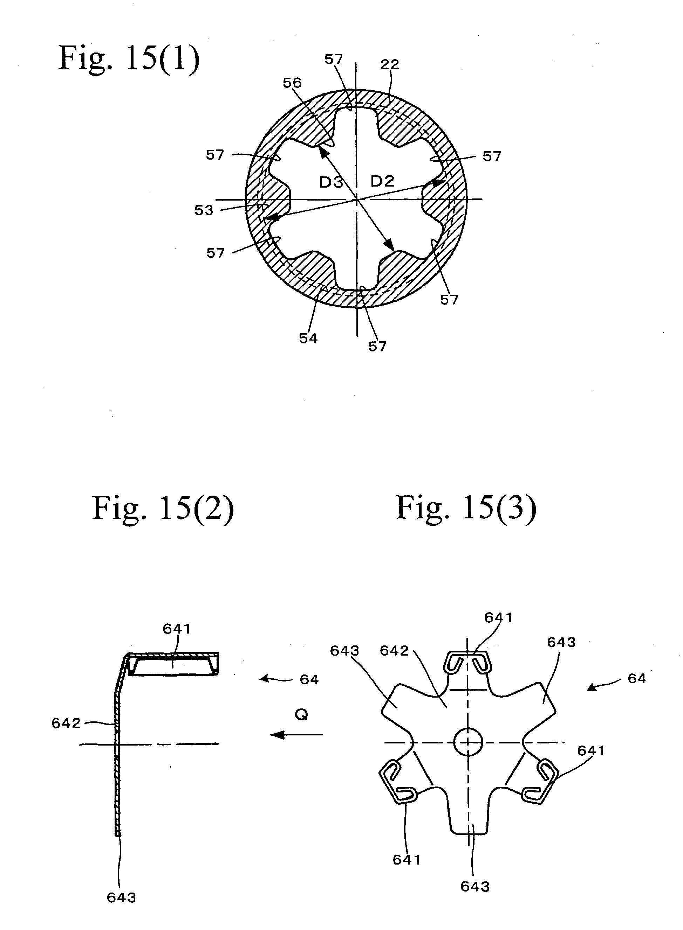

Fig. 15 (1) a sectional view taken on line F-F of Fig. 14(1) showing the input shaft;

Fig. 15(2) is a longitudinal cross section showing a leaf spring;

Fig. 15 (3) is an arrow view as viewed in the direction of Q of Fig. 15(2);

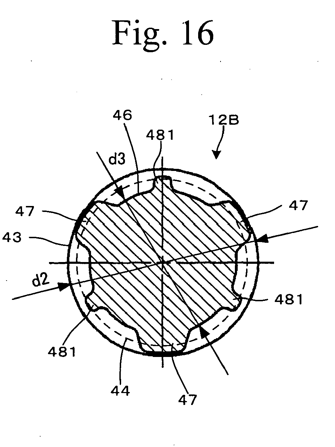

Fig. 16 is a cross section taken on line F-F of Fig. 14(1) showing the inner shaft;

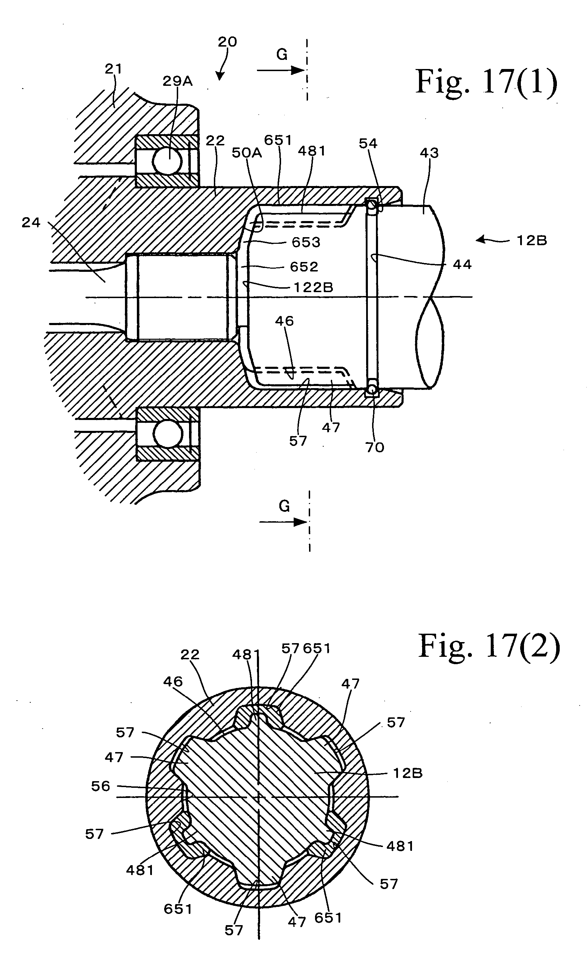

Fig. 17 (1) and Fig. 17(2) show a coupled portion of a steering shaft according to a seventh embodiment of the present invention, Fig. 17 (1) is a longitudinal cross section showing the coupled portion; and Fig. 17 (2) is a sectional view taken on line G-G of Fig. 17(1);

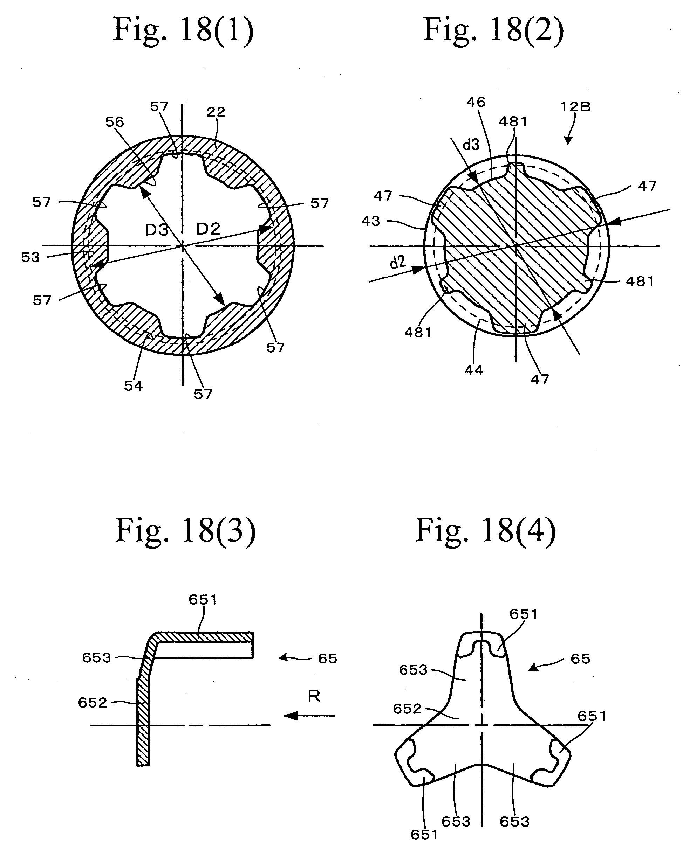

Fig. 18(1) is a cross section taken on line G-G of Fig. 17(1) showing the input shaft;

Fig. 18(2) is a cross section taken on line G-G of Fig. 17(1) showing the inner shaft;

Fig. 18(3) is a longitudinal cross section showing the leaf spring;

Fig. 18 (4) is an arrow view as viewed in the direction of R of Fig. 18(3);

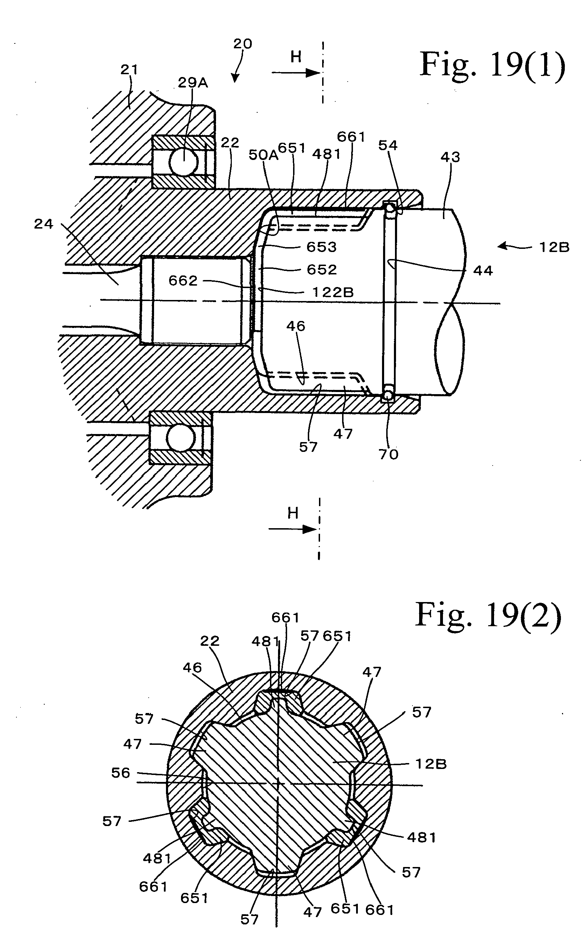

Fig. 19 (1) and 19 (2) show the coupled portion of the steering shaft according to an eighth embodiment of the present invention, Fig. 19(1) is a longitudinal cross section showing the coupled portion; and Fig. 19(2) is a sectional view taken on line H-H of Fig. 19(1);

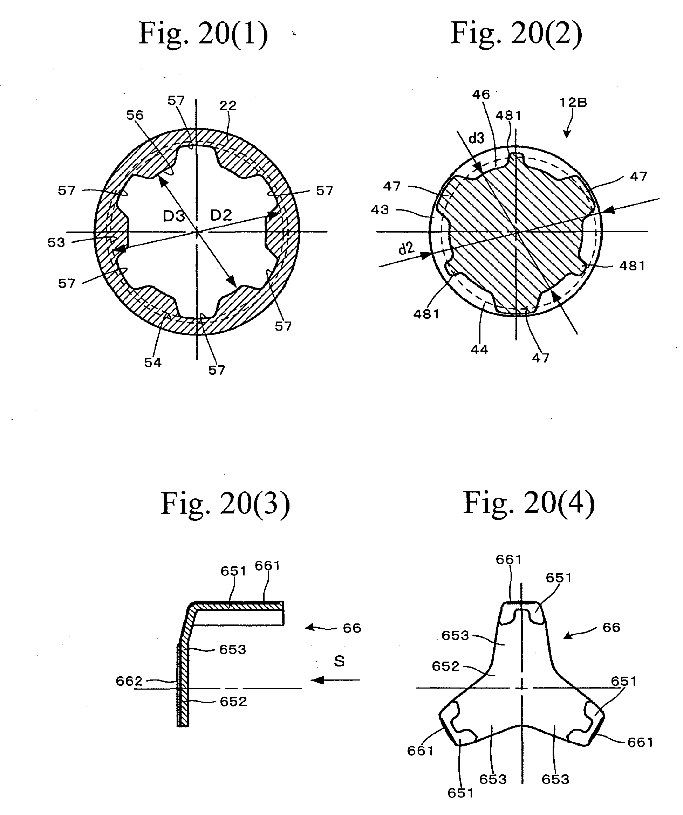

Fig. 20(1) is a cross section taken on line H-H of Fig. 19(1) showing the input shaft;

Fig. 20(2) is a cross section taken on line H-H of Fig. 19(1) showing the inner shaft;

Fig. 20(3) is a longitudinal cross section showing the leaf spring;

Fig. 20 (4) is an arrow view as viewed in the direction of S of Fig. 20(3);

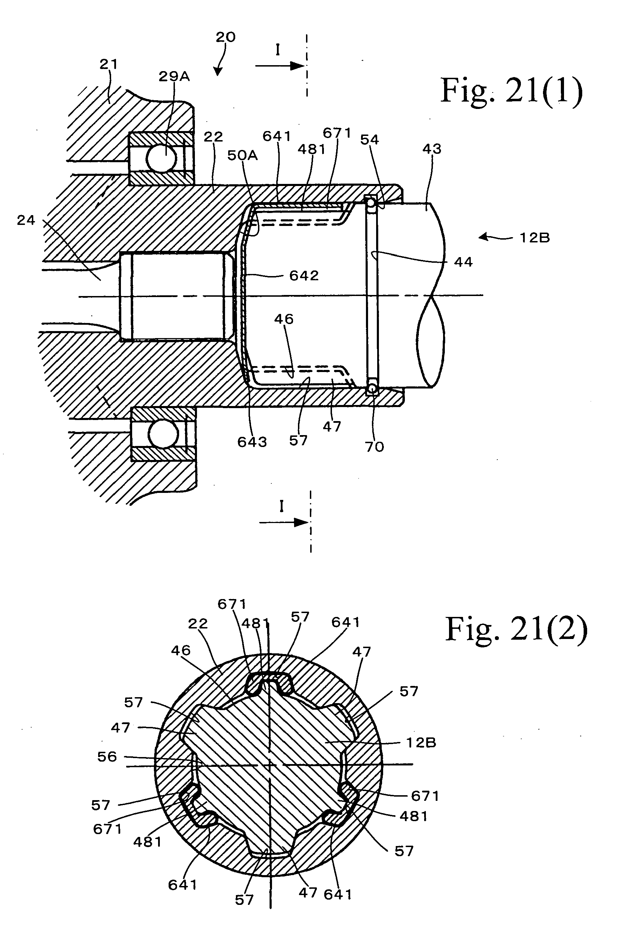

Fig. 21(1) and Fig. 21(2) show the coupled portion of the steering shaft according to a ninth embodiment of the present invention, Fig. 21 (1) is a longitudinal cross section showing the coupled portion; and Fig. 21 (2) is a sectional view taken on line I-I of Fig. 21(1);

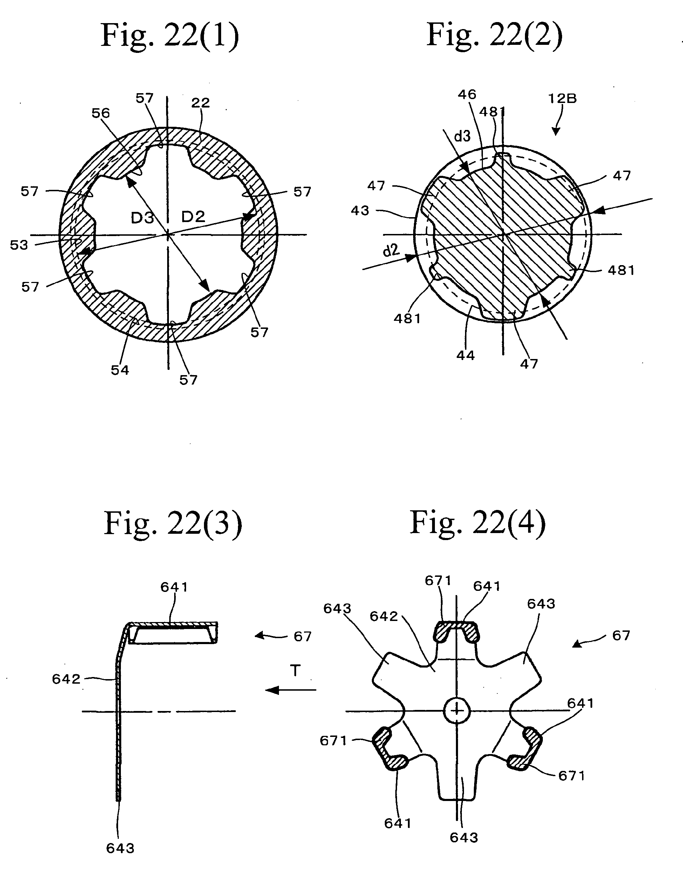

Fig. 22(1) is a cross section taken on line I-I of Fig. 21(1) showing the input shaft;

Fig. 22(2) is a cross section taken on line I-I of Fig. 21(1) showing the inner shaft;

Fig. 22(3) is a longitudinal cross section showing the leaf spring; Fig. 22 (4) is an arrow view as viewed in the direction of T of Fig. 22(3);

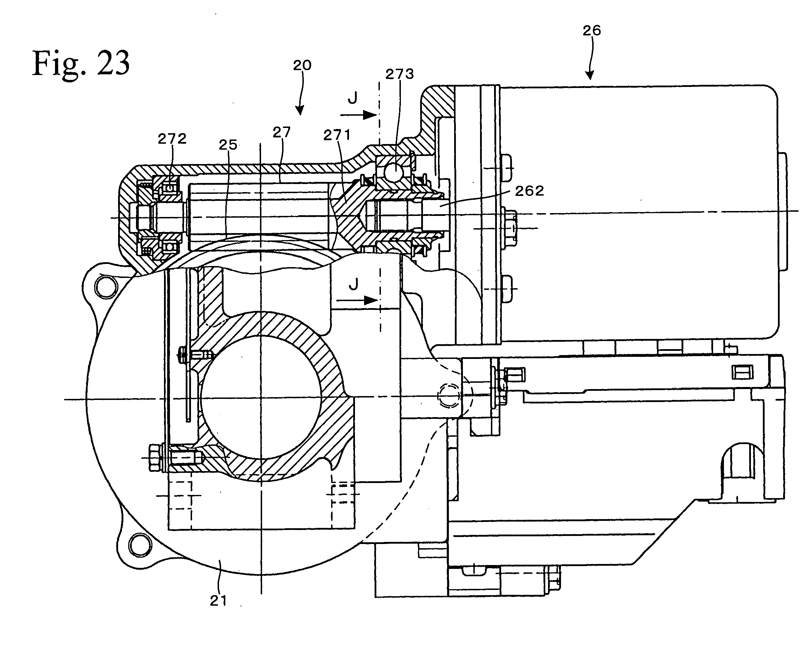

Fig. 23 is a cross section in which a part of a tenth embodiment of the present invention has been cut off, and shows a coupled portion between the motor shaft and the worm shaft of an assist device;

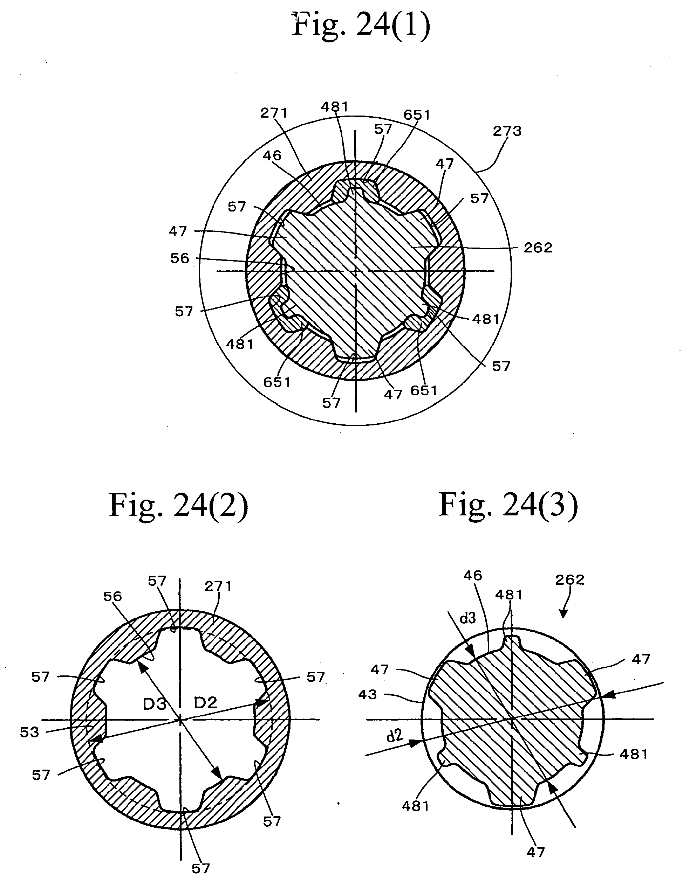

Fig. 24(1) is a cross section taken on line J-J of Fig. 23;

Fig. 24(2) is a cross section taken on line J-J of Fig. 23 showing the worm shaft;

Fig. 24(3) is a cross section taken on line J-J of Fig. 23 showing the motor shaft;

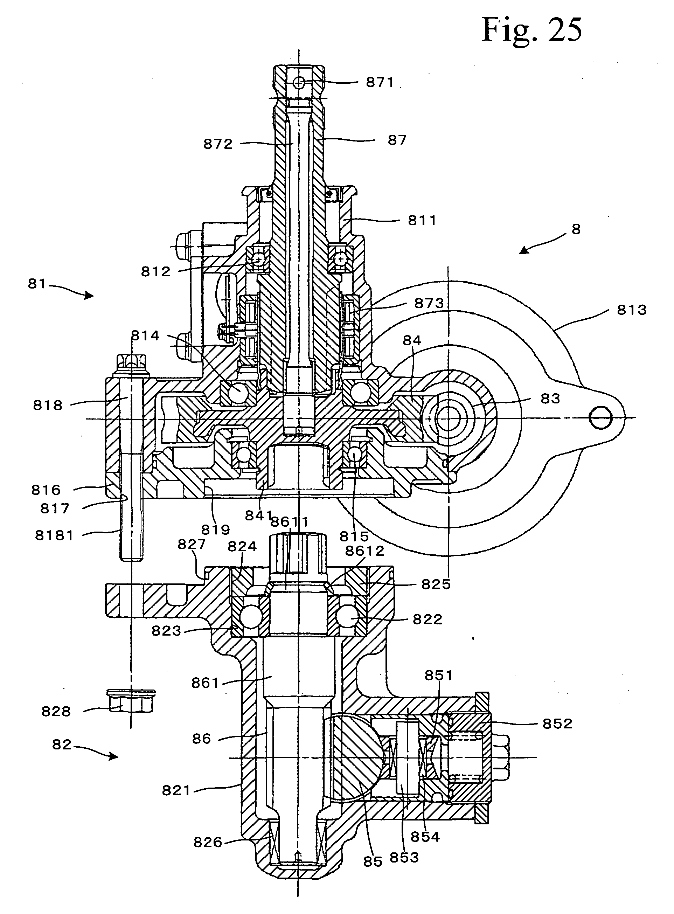

Fig. 25 is a longitudinal cross section showing an assist device according to an eleventh embodiment of the present invention in a state before installed;

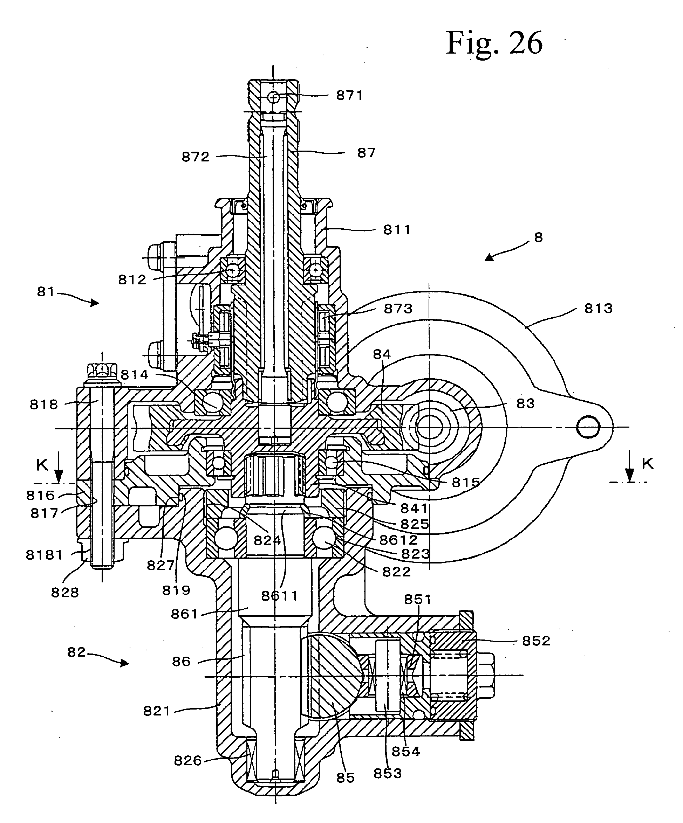

Fig. 26 is a longitudinal cross section showing an assist device according to an eleventh embodiment of the present invention in a state after installed;

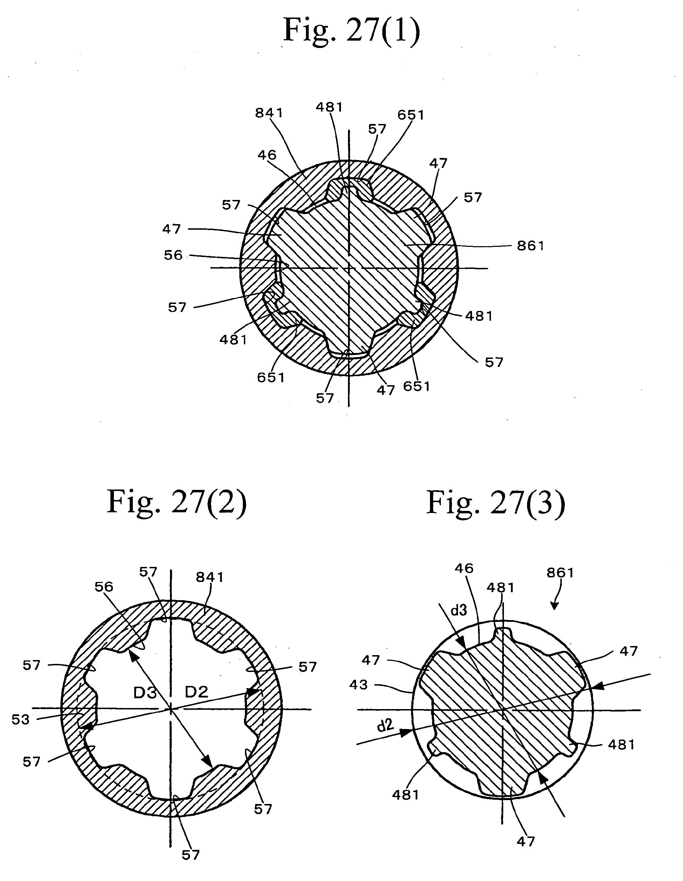

Fig. 27(1) is a cross section taken on line K-K of Fig. 26;

Fig. 27(2) is a cross section taken on line K-K of Fig. 26 showing the worm wheel; and

Fig. 27(3) is a cross section taken on line K-K of Fig. 26 showing a pinion shaft.

### DETAILED DESCRIPTION OF THE PREFERRED EMBODIMENTS

Now, preferred embodiments of the present invention will be described in detail while referring to the accompanying drawings.

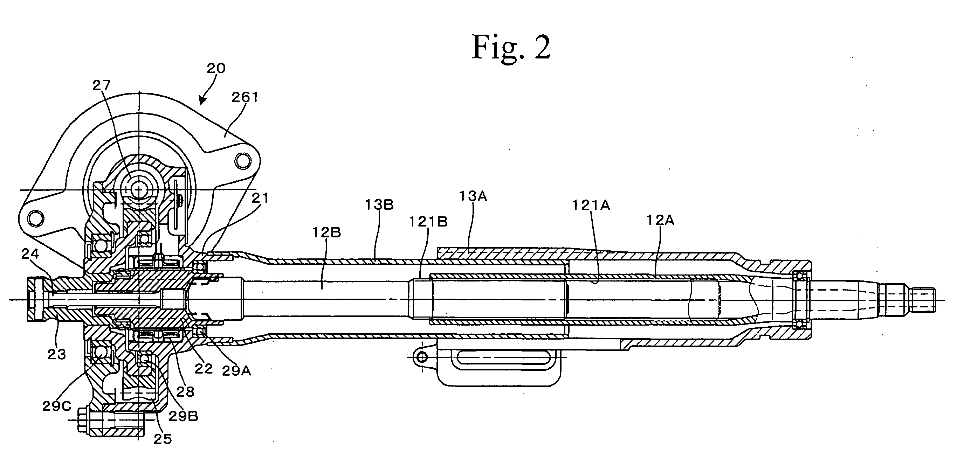

Fig. 1 shows the entire steering device according to the present invention, and is a partially cut front view, showing an embodiment applied to a motor-driven power steering device having a steering auxiliary portion. Fig. 2 is a longitudinal cross section showing principal part of Fig. 1.

As shown in Figs. 1 and 2, a steering device according to the present invention comprises: a steering shaft 12 in which the steering wheel 11 can be mounted to the vehicle rear side (right side of Fig. 1, Fig. 2); a steering column 13 in which this steering shaft 12 has been inserted; an assist device (steering auxiliary portion) 20 for giving auxiliary torque to this steering torque 12; and a steering gear 30 coupled to the vehicle front side (left side of Fig. 1, Fig. 2) of this steering shaft 12 via a rack/pinion mechanism, not shown.

The steering shaft 12 is constructed by combining an outer shaft 12A and an inner shaft 12B by means of spline engagement in such a manner as to be able to freely transmit turning effect and to relatively displace in the axial direction. In other words, on the vehicle front side of the outer shaft 12A, there is formed a female spline 121A, and a male spline 121B formed on the vehicle rear side of the inner shaft 12B has been spline-engaged. Therefore, the outer shaft 12A and the inner shaft 12B are capable of shortening the entire length during collision because these spline engaging portions relatively slide.

Also, a tubular steering column 13 in which the steering shaft 12 has been inserted is constructed such that the outer column 13A and the inner column 13B are combined so as to be able to telescopically move, and has the so-called collapsible structure in which when an axial shock is applied during collision, the entire length is shortened while absorbing the energy due to this shock. Thus, the side end portion ahead of the vehicle of the inner column 13B has been pressed in and fitted in the side end portion in the rear of the vehicle of the gear housing 21. Also, the side end portion ahead of the vehicle of the inner column 13B of the inner shaft 12B is caused to pass inside this gear housing 21 and is coupled to the side end portion in the rear of the vehicle of the input shaft 22 of the assist device 20.

The steering column 13 has been supported on a part of the body 18 such as the lower surface of a dash board with the intermediate part thereof by a supporting bracket 14. Also, between this supporting bracket 14 and the body 18, there is provided a locked portion in such a manner that when a shock toward the front side of the body is applied to this supporting bracket 14, the supporting bracket 14 will be disengaged from the locked portion to move toward the front side of the body.

Also, the top end portion of the gear housing 21 is also supported on a part of the vehicle body 18. Also, in the case of the present embodiment, a tilt mechanism and a telescopic mechanism are provided, whereby positions of the vehicle body in the longitudinal directions and height positions of the steering wheel 11 have been made adjustable. Such tilt and telescopic mechanisms are conventionally known, and are not characteristic portions of the present invention. Detailed description will therefore be omitted.

An output shaft 23 projecting from the side end surface ahead of the body of the gear housing 21 is coupled to the rear end portion of an intermediate shaft 16 via a universal joint 15. Also, to the front end portion of this intermediate shaft 16, an input shaft 31 of the steering gear 30 has been coupled via another universal joint 17. A pinion, not shown, is coupled to this input shaft 31. Also, a rack, not shown, is engaged with this pinion, and the rotations of the steering wheel move a tie rod 32 to steer a wheel, not shown.

As shown in Fig. 2, in the gear housing 21 of the assist device 20, an input shaft 22 and an output shaft 23 are axially supported rotatively on the same axle shaft by bearings 29A, 29B, 29C, and the input shaft 22 and the output shaft 23 are coupled to each other through a torsion bar 24. To the output shaft 23, a worm wheel 25 is mounted, and a worm 27 is engaged with the worm wheel 25. A case 261 of the electric motor 26 is fixed to the gear housing 21, and the worm 27 is combined to a rotating shaft, not shown, of this electric motor 26.

Also, at the periphery of the intermediate portion of the input shaft 22, a torque sensor 28 for detecting torsion of the torsion bar 24 has been provided. The direction and magnitude of torque to be applied to this steering shaft 12 from the steering wheel 11 are detected by this torque sensor 28, and in response to this detection signal, the electric motor 26 is driven, and the output shaft 23 is caused to generate auxiliary torque with predetermined magnitude in a predetermined direction via a deceleration mechanism consisting of the worm 27 and the worm wheel 25.

### * First Embodiment

Figs. 3 (1) and (2) and Figs. 4 (1) to (3) show a coupled portion of a steering shaft according to a first embodiment of the present invention, and show an example in which it has been applied to a coupled portion between an inner shaft (upper steering shaft) 12B of Fig. 2, and an input shaft (lower steering shaft) 22 of an assist device 20. Fig. 3(1) is a longitudinal section showing the coupled portion between the inner shaft 12B and the input shaft 22, and Fig. 3(2) is a cross section taken on line A-A of Fig. 3(1). Fig. 4(1) is a cross section showing an input shaft 22 taken on line A-A of Fig. 3 (1), Fig. 4 (2) is a cross section showing a spring taken on line A-A of Fig. 3(1), and Fig. 4(3) is a cross section showing an inner shaft 12B taken on line A-A of Fig. 3(1).

As shown in Figs. 3 (1) and (2) and Figs. 4 (1) to 4 (3), a side end portion ahead of the body (left side of Figs. 3 (1) and (2) ) of the inner shaft 12B has been coupled to a side end portion in the rear of the body (right side of Fig. 3) of the input shaft 22 of the assist device 20. The side end portion ahead of the body of the inner shaft 12B has been formed in a solid pillar shape, and from the side end portion ahead of the body, a small-diameter shaft portion 40 having a diameter dimension of d1 and a large-diameter shaft portion 43 having a diameter dimension of d2 have been formed in this order.

On an outer periphery of the small-diameter shaft portion 40, three projections 41, each having a semicircular shape in a cross section perpendicular to the shaft, and three grooves 42, each having a semicircular shape in a cross section perpendicular to the shaft have been alternately formed at regular intervals (60° intervals) over the entire length of the small-diameter shaft portion 40 in the axial direction. Apexes of those three semicircular projections 41 are on the same circumference as the large-diameter shaft portion 43 having a diameter dimension of d2, and the circumference of the large-diameter shaft portion 43 has become a circumscribed circle of apexes of those three projections 41. Also, on the outer periphery of the large-diameter shaft portion 43, an annular groove 44 having a rectangular cross section has been formed over the entire periphery.

The side end portion in the rear of the body of the input shaft 22 has been formed in a hollow cylindrical shape, and from the side end portion in the rear of the body, a large-diameter hole 53 having a diameter dimension of D2 and a small-diameter hole 50 having a diameter dimension of D1 have been formed in this order. On the inner periphery of the small-diameter hole 50, six grooves 52, each having a semicircular shape in a cross section perpendicular to the shaft have been formed at regular intervals (60° intervals). Apexes of these six semicircular grooves 52 are on the same circumference as the large-diameter hole 53 having a diameter dimension of D2, and the circumference of the large-diameter hole 53 has become a circumscribed circle of apexes of six grooves 52. Also, on the inner periphery of the large-diameter hole 53, an annular groove 54 has been formed over the entire periphery.

The small-diameter shaft portion 40 of the inner shaft 12B has been formed such that the diameter dimension d1 thereof is somewhat smaller than the diameter dimension D1 of the small-diameter hole 50 of the input shaft 22, and the large-diameter shaft portion 43 has been formed such that the diameter dimension d2 thereof is somewhat smaller than the diameter dimension D2 of the large-diameter hole 53. Thereby, the inner shaft 12B is smoothly fitted into the input shaft 22.

When the inner shaft 12B is fitted into the input shaft 22, three columnar space are formed by a semicircular groove 42 of the inner shaft 12B and a semicircular groove 52 of the input shaft 22. In these columnar space, a hollow cylindrical spring 60 (rotational direction biasing member) is inserted. The hollow cylindrical spring 60 has been formed such that the outer diameter dimension thereof in a free state is somewhat larger than the inner diameter dimension of the columnar space. Therefore, the inner shaft 12B and the input shaft 22 are coupled without looseness. For the reason, when torque in inputted to two shafts, even if rotations in either left or right direction may be applied, they are elastically coupled and the torque can be transmitted. In this respect, the special effect in which such a spring has been installed is applicable to other embodiments. The hollow cylindrical spring 60 is formed by bending plate-shaped spring steel into the shape of a cylinder and slitting has been formed in the axial direction. This slitting causes the hollow cylindrical spring 60 to be elastically deformed and be reduced in its diameter, and it is possible to easily install to the columnar space.

When the inner shaft 12B is fitted into the input shaft 22, the inner shaft 12B has been formed such that an annular groove 44 of the inner shaft 12B and an annular groove 54 of the input shaft 22 coincide with each other at positions in an axial direction. Therefore, in a state where an annular wire ring 70 (regulation member) is mounted to the annular groove 44 and the hollow cylindrical spring 60 has been inserted into the semicircular groove 42, from the right side of Fig. 3 toward the left side, the inner shaft 12B is inserted into the input shaft 22.

Then, the wire ring 70 and the hollow cylindrical spring 60 are guided to a chamfered portion formed on an aperture at the side end portion in the rear of the body of the large-diameter hole 53, are reduced in its diameter while elastically deformed, when the annular groove 44 and an annular groove 54 coincide with each other at positions in an axial direction, the wire ring 70 is enlarged in its diameter while the elastic deformation is returned, and enters a state in which it has engaged with both the annular groove 44 and the annular groove 54. At the same time, the hollow cylindrical spring 60 is fitted into the semi-circular groove 52 of the input shaft 22 in its reduced diameter state.

When the inner shaft 12B is completely inserted into the input shaft 22, the wire ring 70 engages with both the annular groove 44 and the annular groove 54 to regulate relative movement between the inner shaft 12B and the input shaft 22 in the axial direction; therefore, there is no possibility that the inner shaft 12B comes off from the input shaft 22. This wire ring 70, the annular groove 44 and the annular groove 54 constitute a movement regulation member for regulating any relative movement between the inner shaft 12B and the input shaft 22 in the axial direction. In place of the wire ring 70, an O-ring (movement regulation member) made of resin or synthetic rubber may be used.

Since in a state where the wire ring 70 is engaged with both the annular groove 44 and the annular groove 54, design has been made such that clearances d1, d2 are formed between the side end portion 122B of the inner shaft 12B, the side end portion 24A in the rear of the body of the torsion bar and the side end portion 50A in the rear of the body of the small-diameter hole 50 of the input shaft 22, it is possible to reliably cause the wire ring 70 to engage with both the annular groove 44 and the annular groove 54.

In the above-described installation procedure, in a state where the wire ring 70 has been mounted on the annular groove 54 on the input shaft 22 side in advance and the hollow cylindrical spring 60 has been inserted into the semi-circular groove 52 on the input shaft 22 side in advance, the inner shaft 12B may be inserted into the input shaft 22. Since axial relative movement between the inner shaft 12B and the input shaft 22 can be regulated only by inserting the inner shaft 12B into the input shaft 22 as described above, it becomes possible to reduce the assembly man-hours.

Since there is a minute clearance in the rotational direction and in the radial direction between the projection 41 of the inner shaft 12B and the groove 52 of the input shaft 22, installation between the inner shaft 12B and the input shaft 22 can be easily performed. Also, although there is a minute clearance between the projection 41 and the groove 52, since in columnar space to be formed between the groove 42 of the inner shaft 12B and the groove 52 of the input shaft 22, the hollow cylindrical spring 60 has been fitted in a compressed state, and therefore, between the inner shaft 12B and the input shaft 22, no looseness occurs in the rotational and radial directions.

Also, even if there may be eccentricity or inclination between the inner shaft 12B and the input shaft 22, it can be absorbed by the elastic force of the hollow cylindrical spring 60. When during driving operation, rotating torque is applied between the inner shaft 12B and the input shaft 22 and the rotating torque exceeds the elastic force of the hollow cylindrical spring 60, the projection 41 of the inner shaft 12B and the groove 52 of the input shaft 22 abut against each other to transmit the rotating torque. In the above-described first embodiment, the projection 41 having a semicircular shape in a cross section perpendicular to the shaft may be replaced with spline or serration.

### * Second Embodiment

Next, the description will be made of the second embodiment of the present invention. Figs. 5(1) and (2) and Figs. 6(1) to (3) show a coupled portion of a steering shaft according to the second embodiment of the present invention, Fig. 5(1) is a longitudinal cross section showing a coupled portion between the inner shaft 12B and the input shaft 22, and Fig. 5 (2) is a cross section taken on line B-B of Fig. 5 (1). Fig. 6 (1) is a cross section showing the input shaft 22, taken on line B-B of Fig. 5(1), Fig. 6(2) is a cross section showing the spring and the columnar pin taken on line B-B of Fig. 5 (1), and Fig. 6(3) is a cross section showing the inner shaft 12B taken on line B-B of Fig. 5(1). In the following description, only the structural portions and operations different from the above-described embodiments will be described, and repeated description will be omitted.

The second embodiment is an example in which the semi-circular projection 41 of the inner shaft 12B has been abolished and an attempt has been made to transmit torque between the inner shaft 12B and the input shaft 22 via the columnar pin (rotational torque transmission member).

In other words, as shown in Fig. 6(3), on the outer periphery of the small-diameter shaft portion 40 of the inner shaft 12B, six grooves 42, each having a semicircular shape in a cross section perpendicular to the shaft, have been formed at regular intervals (60° intervals) over the entire axial length of the small-diameter shaft portion 40. Also, on the outer periphery of the large-diameter shaft portion 43, as in the case of the first embodiment, an annular groove 44 having a rectangular cross section has been formed over the entire periphery. As shown in Fig. 6(1), the shape of the input shaft 22 is the same as in the first embodiment.

In a state where three each of the hollow cylindrical spring 60 and the columnar pin 61 as the rotational torque transmission member are alternately inserted into six grooves 42 of the inner shaft 12B and in which the annular wire ring 70 has been mounted on the annular groove 44, the inner shaft 12B is inserted into the input shaft 22 from the right side of Fig. 5 toward the left side. The outer diameter dimension of the columnar pin 61 has been formed to be somewhat smaller than the inner diameter dimension of the columnar space to be formed with the groove 42 of the inner shaft 12B and the groove 52 of the input shaft 22.

Then, the wire ring 70 and the hollow cylindrical spring 60 are guided to a chamfered portion formed on an aperture at the side end portion in the rear of the body of the large-diameter hole 53, are reduced in its diameter while elastically deformed, and are inserted into the large-diameter hole 53. When the annular groove 44 and the annular groove 54 coincide with each other at positions in an axial direction, the wire ring 70 is enlarged in its diameter while the elastic deformation is returned, and enters a state in which it has engaged with both the annular groove 44 and the annular groove 54. At the same time, the hollow cylindrical spring 60 and the columnar pin 61 are fitted into the semi-circular groove 52 of the input shaft 22 (See Figs. 5(1) and (2)).

Since when the inner shaft 12B is completely inserted into the input shaft 22, the wire ring 70 engages with both the annular groove 44 and the annular groove 54 to regulate relative axial movement between the inner shaft 12B and the input shaft 22; therefore, there is no possibility that the inner shaft 12B comes off from the input shaft 22.

When inserting the inner shaft 12B into the input shaft 22, the columnar pin 61 is fitted into the semi-circular groove 52 of the input shaft 22, and since there is a minute clearance in the rotational direction and in the radial direction between the columnar pin 61, the groove 52 and the groove 42, installation between the inner shaft 12B and the input shaft 22 can be easily performed.

Also, although there is a minute clearance between the columnar pin 61, the groove 52 and the groove 42, in the columnar space to be formed by the groove 42 of the inner shaft 12B and the groove 52 of the input shaft 22, the hollow cylindrical spring 60 has been fitted in a compressed state, and therefore, between the inner shaft 12B and the input shaft 22, no looseness occurs in the rotational and radial directions. Also, even if there may be eccentricity or inclination between the inner shaft 12B and the input shaft 22, it can be absorbed by the elastic force of the hollow cylindrical spring 60.

When during driving operation, rotating torque is applied between the inner shaft 12B and the input shaft 22 and the rotating torque exceeds the elastic force of the hollow cylindrical spring 60, the outer periphery of the columnar pin 61 abuts against the groove 42 of the inner shaft 12B and the groove 52 of the input shaft 22 at the same time to transmit the rotating torque.

According to the second embodiment, the inner shaft 12B can be formed only with the groove 42 having a semi-circular cross section on the outer periphery of the small-diameter shaft portion 40; therefore, the shape of the inner shaft 12B becomes simpler, and it becomes easier to manufacture. It is therefore possible to reduce the manufacturing cost of the inner shaft 12B.

### * Third Embodiment

Next, the description will be made of the third embodiment of the present invention. Figs. 7(1) and (2) and Figs. 8(1) to (3) show a coupled portion of a steering shaft according to the third embodiment of the present invention, Fig. 7(1) is a longitudinal cross section showing a coupled portion between the inner shaft 12B and the input shaft 22, and Fig. 7 (2) is a cross section taken on line C-C of Fig. 7 (1) . Fig. 8 (1) is a cross section showing the input shaft 22, taken on line C-C of Fig. 7 (1), Fig. 8 (2) is a cross section showing the spring and the sphere taken on line C-C of Fig. 7 (1), and Fig. 8 (3) is a cross section showing the inner shaft 12B taken on line C-C of Fig. 7(1). In the following description, only the structural portions and operations different from the above-described embodiments will be described, and repeated description will be omitted.

The third embodiment is an example in which in place of the columnar pin 61 according to the second embodiment, a sphere is used and an attempt has been made to transmit torque between the inner shaft 12B and the input shaft 22.

In other words, as shown in Figs. 8(1) and (3), the shapes of the input shaft 22 and the inner shaft 12B are quite the same as in the second embodiment. In place of the columnar pin 61 according to the second embodiment, a sphere 62 having the same diameter dimension as the outer diameter dimension of the columnar pin 61 has been used as a rotational torque transmission member.

In a state where three each of the hollow cylindrical springs 60 and the spheres 62 are alternately inserted into six grooves 42 of the inner shaft 12B and the annular wire ring 70 has been mounted on the annular groove 44, the inner shaft 12B is inserted into the input shaft 22 from the right side of Fig. 7 toward the left side. The outer diameter dimension of the sphere 62 has been formed to be somewhat smaller than the inner diameter dimension of the columnar space to be formed by the groove 42 of the inner shaft 12B and the groove 52 of the input shaft 22.

Then, the wire ring 70 and the hollow cylindrical spring 60 are guided to a chamfered portion formed on an aperture at the side end portion in the rear of the body of the large-diameter hole 53, are reduced in its diameter while elastically deformed, and are inserted into the large-diameter hole 53. When the annular groove 44 and the annular groove 54 coincide with each other at positions in an axial direction, the wire ring 70 is enlarged in its diameter while the elastic deformation is returned, and enters a state in which it has engaged with both the annular groove 44 and the annular groove 54. At the same time, the hollow cylindrical spring 60 and the sphere 62 are fitted into the semi-circular groove 52 of the input shaft 22 (See Figs. 7 (1) and (2)).

When inserting the inner shaft 12B into the input shaft 22, the sphere 62 is fitted into the semi-circular groove 52 of the input shaft 22, and since there is a minute clearance in the rotational direction and in the radial direction between the sphere 62, the groove 52 and the groove 42, installation between the inner shaft 12B and the input shaft 22 can be easily performed.

Also, although there is a minute clearance between the sphere 62, the groove 52 and the groove 42, in the columnar space to be formed by the groove 42 of the inner shaft 12B and the groove 52 of the input shaft 22, the hollow cylindrical spring 60 has been fitted in a compressed state, and therefore, between the inner shaft 12B and the input shaft 22, no looseness occurs in the rotational and radial directions. Also, even if there may be eccentricity or inclination between the inner shaft 12B and the input shaft 22, it can be absorbed by the elastic force of the hollow cylindrical spring 60.

When a rotating torque is applied between the inner shaft 12B and the input shaft 22 and the rotating torque exceeds the elastic force of the hollow cylindrical spring 60 during driving operation, the outer periphery of the sphere 62 abuts against the groove 42 of the inner shaft 12B and the groove 52 of the input shaft 22 at the same time to transmit the rotating torque.

According to the third embodiment, since the outer periphery of the sphere 62 abuts against the groove 42 of the inner shaft 12B and the groove 52 of the input shaft 22 in a point, even if there may be great eccentricity or inclination between the inner shaft 12B and the input shaft 22, the installation can be easily performed and it becomes possible to smoothly transmit the rotating torque.

### * Fourth Embodiment

Next, the description will be made of the fourth embodiment of the present invention. Figs. 9(1) and (2) and Figs. 10 (1) to (3) show a coupled portion of a steering shaft according to the fourth embodiment of the present invention, Fig. 9(1) is a longitudinal cross section showing a coupled portion between the inner shaft 12B and the input shaft 22, and Fig. 9 (2) is a cross section taken on line D-D of Fig. 9 (1) . Fig. 10 (1) is a cross section showing the input shaft 22, taken on line D-D of Fig. 9 (1), Fig. 10 (2) is a cross section showing the spring taken on line D-D of Fig. 9(1), and Fig. 10(3) is a cross section showing the inner shaft 12B taken on line D-D of Fig. 9 (1) . In the following description, only the structural portions and operations different from the above-described embodiments will be described, and repeated description will be omitted.

The fourth embodiment is an example in which between the inner shaft 12B and the input shaft 22, a spring for giving an axial biasing force has been added.

In other words, at the side end portion ahead of the body of the inner shaft 12B, the shaft center thereof has been formed with a columnar hole 45, the side end portion ahead of the body of the columnar hole 45 has been opened, and in this columnar hole 45, a coil spring 71 (axial biasing member) has been inserted. Since the side end portion ahead of the body projects from the aperture in the side end portion ahead of the body of the inner shaft 12B and abuts against a side end portion 24A in the rear of the body of the torsion bar 24, the coil spring 71 gives a biasing force to the inner shaft 12B and the input shaft 22 in directions that cause each of them to space apart from each other in the axial directions.

The any other shapes of the input shaft 22 and the inner shaft 12B other described above are quite the same as in the above-described first embodiment. In the fourth embodiment, the coil spring 71 gives the biasing force to the inner shaft 12B and the input shaft 22 in directions that cause each of them to space apart from each other in the axial directions at all times. It becomes possible to resolve axial looseness between the inner shaft 12B and the input shaft 22 by eliminating the looseness between the wire ring 70 and the annular grooves 54, 44. The steering sensitivity will therefore be improved.

In the above-described first embodiment to the fourth embodiment, the projections 41 having a semicircular shape in a cross section perpendicular to the shaft, the hollow cylindrical spring 60, the columnar pins 61 and the spheres 62 have been provided three each, but at least one each will suffice.

### * Fifth Embodiment

Next, the description will be made of the fifth embodiment of the present invention. Figs. 11(1) and (2) to Fig. 13 show a coupled portion of a steering shaft according to the fifth embodiment of the present invention, Fig. 11 (1) is a longitudinal cross section showing a coupled portion between the inner shaft 12B and the input shaft 22, and Fig. 11(2) is a cross section taken on line E-E of Fig. 11 (1). Fig. 12(1) is a cross section showing the input shaft 22, taken on line E-E of Fig. 11 (1), Fig. 12(2) is a longitudinal cross section showing the leaf spring, and Fig. 12(3) is an arrow view as viewed in the direction of P of Fig. 12 (2) . Fig. 13 is a cross section showing the inner shaft 12B taken on line E-E of Fig. 11(1). In the following description, only the structural portions and operations different from the above-described embodiments will be described, and repeated description will be omitted.

The fifth embodiment is an example, in which the functions of three members: the coil spring 71, hollow cylindrical spring 60, and the wire ring 70 according to the fourth embodiment have been realized by one piece of the leaf spring.

As shown in Figs. 11(1) and (2) to Fig. 13, the side end portion ahead of the body of the inner shaft 12B has been formed into a solid columnar shape, and from the side end portion ahead of the body, a small-diameter shaft portion 46 having a diameter dimension of d3 and a large-diameter shaft portion 43 having a diameter dimension of d2 have been formed in this order. The diameter dimension d3 of the small-diameter shaft portion 46 has been set to be smaller than the diameter dimension d1 of the small-diameter shaft portion 40 according to the first embodiment.

On the outer periphery of the small-diameter shaft portion 46, three wide projections 47, each being a trapezoid in a cross section perpendicular to the shaft and three narrow projections 48, each being a trapezoid in a cross section perpendicular to the shaft have been alternately formed at regular intervals (60° intervals) over the entire axial direction of the small-diameter shaft portion 46. The apexes of the three wide projections 47 are located somewhat inwardly of the large-diameter shaft portion 43 having a diameter dimension of d2, and the apexes of the three narrow projections 48 have been formed inwardly of the apexes of the three wide projections 47. Also, at the side end portion in the rear of the body of the three narrow projections 48, a U-character shaped groove 49 has been formed.

The side end portion in the rear of the body of the input shaft 22 has been formed in a hollow cylindrical shape, and from the side end portion in the rear of the body, a large-diameter hole 53 having a diameter dimension of D2 and a small-diameter hole 56 having a diameter dimension of D3 have been formed in this order. On the inner periphery of the small-diameter hole 56, six wide grooves 57, each being a trapezoid in a cross section perpendicular to the shaft have been formed at regular intervals (60° intervals). The apexes of the six wide grooves 57 are on the same circumference as the large-diameter hole 53 having a diameter dimension of D2, and the circumference of the large-diameter hole 53 is a circumscribed circle of the six wide grooves 57. Also, on the inner periphery of the large-diameter hole 53, an annular groove 54 has been formed over the entire periphery.

The diameter dimension d3 of the small-diameter shaft portion 46 of the inner shaft 12B has been formed to be somewhat smaller than the diameter dimension D3 of the small-diameter hole 56 of the input shaft 22, and the diameter dimension d2 of the large-diameter shaft portion 43 has been formed to be somewhat smaller than the diameter dimension D2 of the large-diameter hole 53. Further, the width of the wide grooves 57 in the circumferential direction has been formed to be somewhat smaller than the width of wide projection 47 in the circumferential direction. Thereby, the inner shaft 12B is smoothly fitted into the input shaft 22.

When the inner shaft 12B is fitted into the input shaft 22, three inverted U-character shaped space 51 are formed between the narrow projections 48 of the inner shaft 12B and the wide grooves 57 of the input shaft 22. In these inverted U-character shaped space 51, an inverted U-shaped portion 631 of the leaf spring 63 shown in Figs. 12(2) and (3) is inserted. The width dimension of the inverted U-shaped portion 631 in its free state in the circumferential direction has been formed to be somewhat larger than the width dimension of the inverted U-character shaped space 51 in the circumferential direction.

As shown in Figs. 12 (2) and (3), a leaf spring 63 has been formed by pressing-cut one sheet of plate-shaped spring steel with press for bending. The leaf spring 63 is formed with a disk portion 632 at the central part thereof, and has inverted U-shaped portions 631 at three places for extending from three places of this disk portion 632 on the outer periphery toward the rear side (right side of Fig. 12(2)) of the body, which have been bent into the inverted U-character shape on the shaft center side. On the rear side of the body of the inverted U-shaped portion 631, an U-shaped projection 633 which has been bent in the U-character shape toward the shaft center is formed, and on the further rear side of the body of the U-shaped projection 633, a restraining end portion 634 for obliquely extending outwardly in the radial direction has been formed.

Length L1, in the axial direction, of the leaf spring 63 shown in Fig. 12(2) has been formed to be somewhat longer than length L2, in the axial direction, from the right end of an annular groove 54 of the input shaft 22 shown in Fig. 11 (1) to the side end portion 24A in the rear of the body of the torsion bar 24.

In a state where, the leaf spring 63 is inserted into the inner shaft 12B from the front side of the body and the three U-shaped projections 633 of the leaf spring 63 have been caused to engage with the three U-shaped grooves 49 of the narrow projection 48 of the inner shaft 12B, the inner shaft 12B will be inserted into the input shaft 22 from the right side of Fig. 11 toward the left side.

Then, the inverted U-shaped portion 631 of the leaf spring 63 and the restraining end portion 634 are guided to a chamfered portion formed on an aperture at the side end portion in the rear of the body of the large-diameter hole 53, are reduced in its diameter while elastically deformed, and the disk portion 632 abuts against the side end portion 24A in the rear of the body of the torsion bar 24. Thereafter, when the inner shaft 12B is further pressed into the input shaft 22, the right end of the restraining end portion 634 of the leaf spring 63 is enlarged in its diameter while the elastic deformation is returned to engage with the annular groove 54 in the input shaft 22. At the same time, the inverted U-shaped portion 631 of the leaf spring 63 is fitted into the inverted U-character shaped space 51 to be formed by the narrow projection 48 and the wide groove 57 in the diameter-reduced state.

Therefore, since when the inner shaft 12B is completely inserted into the input shaft 22, the right end of the restraining end portion 634 of the leaf spring 63 engages with the annular groove 54 of the input shaft 22 to regulate relative movement between the inner shaft 12B and the input shaft 22 in the axial direction, there is no possibility that the inner shaft 12B comes off from the input shaft 22.

Because there is a minute clearance in the rotational and radial directions between the wide projection 47 of the inner shaft 12B and the wide groove 57 of the input shaft 22, installation between the inner shaft 12B and the input shaft 22 can be easily performed. Also, although there is a minute clearance between the wide projection 47 and the wide groove 57, in the inverted U-shaped space 51 to be formed by the narrow projection 48 and the wide groove 57, the inverted U-shaped portion 631 of the leaf spring 63 has been fitted in a compressed state, and therefore between the inner shaft 12B and the input shaft 22, no looseness occurs in the rotational and radial directions.

Also, the disk portion 632 of the leaf spring 63 abuts against the side end portion 24A in the rear of the body of the torsion bar 24 and the leaf spring 63 gives a biasing force to the inner shaft 12B and the input shaft 22 in directions that cause each of them to space apart from each other in the axial directions. Therefore, since it becomes possible to eliminate axial looseness between the inner shaft 12B and the input shaft 22, the steering sensitivity will be improved.

Further, even if there may be eccentricity or inclination between the inner shaft 12B and the input shaft 22, it can be absorbed by the elastic force of the inverted U-shaped portion 631 of the leaf spring 63. When during driving operation, rotating torque is applied between the inner shaft 12B and the input shaft 22 and the rotating torque exceeds the elastic force of the inverted U-shaped portion 631 of the leaf spring 63, the wide projection 57 of the inner shaft 12B and the wide groove 57 of the input shaft 22 abut against each other to transmit the rotating torque.

According to the fifth embodiment, since one piece of the leaf spring 63 is capable of eliminating axial looseness between the inner shaft 12B and the input shaft 22, preventing the inner shaft 12B from coming off from the input shaft 22 in the axial direction, and eliminating looseness in the rotational and radial directions between the inner shaft 12B and the input shaft 22, it becomes possible to reduce parts fabricating cost and assembly man-hour by reducing the number of the parts.

### * Sixth Embodiment

Next, the description will be made of the sixth embodiment of the present invention. Figs. 14(1) and (2) to Fig. 16 show a coupled portion of a steering shaft according to the sixth embodiment of the present invention, Fig. 14(1) is a longitudinal cross section showing a coupled portion between the inner shaft 12B and the input shaft 22, and Fig. 14(2) is a cross section taken on line F-F of Fig. 14(1). Fig. 15(1) is a cross section showing the input shaft 22, taken on line F-F of Fig. 14 (1), Fig. 15(2) is a longitudinal cross section showing the leaf spring, and Fig. 15(3) is an arrow view as viewed in the direction of Q of Fig. 15 (2) . Fig. 16 is a cross section showing the inner shaft 12B taken on line F-F of Fig. 14(1). In the following description, only the structural portions and operations different from the above-described embodiments will be described, and repeated description will be omitted.

The sixth embodiment is an example, in which three hollow cylindrical shaped springs 60 according to the first embodiment have been realized by one piece of leaf spring.

As shown in Figs. 14 (1) and (2) to Fig. 16, the side end portion ahead of the body of the inner shaft 12B has been formed into a solid columnar shape, and from the side end portion ahead of the body, a small-diameter shaft portion 46 having a diameter dimension of d3 and a large-diameter shaft portion 43 having a diameter dimension of d2 have been formed in this order. The diameter dimension d3 of the small-diameter shaft portion 46 has been set to be smaller than the diameter dimension d1 of the small-diameter shaft portion 40 according to the first embodiment.

On the outer periphery of the small-diameter shaft portion 46, three wide projections 47, each being a trapezoid in a cross section perpendicular to the shaft and three narrow projections 481, each being a trapezoid in a cross section perpendicular to the shaft have been alternately formed at regular intervals (60° intervals) over the entire axial direction of the small-diameter shaft portion 46. The apexes of the three wide projections 47 are located somewhat inwardly of the large-diameter shaft portion 43 having a diameter dimension of d2, and the apexes of the three narrow projections 48 have been formed inwardly of the apexes of the three wide projections 47. Also, on the outer periphery of the large-diameter shaft portion 43, an annular groove 44 having a rectangular cross section has been formed over the entire periphery.

The side end portion in the rear of the body of the input shaft 22 has been formed in a hollow cylindrical shape, and from the side end portion in the rear of the body, a large-diameter hole 53 having a diameter dimension of D2 and a small-diameter hole 56 having a diameter dimension of D3 have been formed in this order. On the inner periphery of the small-diameter hole 56, six wide grooves 57, each being a trapezoid in a cross section perpendicular to the shaft have been formed at regular intervals (60° intervals). The apexes of the six wide grooves 57 are on the same circumference as the large-diameter hole 53 having a diameter dimension of D2, and the circumference of the large-diameter hole 53 is a circumscribed circle of the six wide grooves 57. Also, on the inner periphery of the large-diameter hole 53, an annular groove 54 has been formed over the entire periphery.

The diameter dimension d3 of the small-diameter shaft portion 46 of the inner shaft 12B has been formed to be somewhat smaller than the diameter dimension D3 of the small-diameter hole 56 of the input shaft 22, and the diameter dimension d2 of the large-diameter shaft portion 43 has been formed to be somewhat smaller than the diameter dimension D2 of the large-diameter hole 53. Further, the width of the wide grooves 57 in the circumferential direction has been formed to be somewhat smaller than the width of wide projection 47 in the circumferential direction. Thereby, the inner shaft 12B is smoothly fitted into the input shaft 22.

When the inner shaft 12B is fitted into the input shaft 22, three inverted U-character shaped space 511 are formed between the narrow projections 481 of the inner shaft 12B and the wide grooves 57 of the input shaft 22. The narrow projection 481 according to the sixth embodiment has been set to be smaller in both width in the circumferential direction and in height in the radial direction than the narrow projection 48 according to the fifth embodiment. Accordingly, the inverted U-character shaped space 511 according to the sixth embodiment has been set to be larger in both width in the circumferential direction and in height in the radial direction than the inverted U-character shaped space 51 according to the fifth embodiment.

In this inverted U-character shaped space 511, an inverted concave portion 641 of the leaf spring 64 shown in Figs. 15 (2) and (3) is inserted. The outer width dimension of the inverted concave portion 641 of the leaf spring 64 in the circumferential direction in its free state has been formed to be somewhat larger than the width dimension of the inverted U-shaped space 511 in the circumferential direction. Also, the inner width dimension of the inverted concave portion 641 in the circumferential direction in its free state has been formed to be somewhat smaller then the width dimension of the narrow projections 481 in the circumferential direction.

As shown in Figs. 15(2) and (3), the leaf spring 64 has been formed by pressing-cut one sheet of plate-shaped spring steel with press for bending. The leaf spring 64 is formed with a hexagonal-shaped portion 642 at the central part thereof, and has inverted concave portions 641 at three places for extending from three places of this hexagonal-shaped portion 642 on the outer periphery toward the rear side (right side of Fig. 15(2)) of the body, which after being bent into the inverted U-character shape once on the shaft center side, have been obtained by further bending into a mountain shape outwardly. Thereby, since the amount capable of elastic deformation has been made greater than the inverted U-shaped portion 631 of the leaf spring 63 according to the fifth embodiment, the manufacturing error between the inner shaft 12B and the input shaft 22 can be absorbed to thereby absorb the looseness.

Also, on the hexagonal-shaped portion 642 of the leaf spring 64, a trapezoid-shaped abutting portion 643 for radially extending from three places on the outer periphery has been formed with the inverted concave portion 641. The abutting portion 643 has been set to be somewhat smaller than the wide projection 47 of the inner shaft 12B both in the width in the circumferential direction and in height in the radial direction.

In a state where the annular wire ring 70 is mounted on the annular groove 44, the leaf spring 64 is inserted into the inner shaft 12B from the front side of the body, and the narrow projection 481 of the inner shaft 12B has been sandwiched with the three inverted concave portion 641 of the leaf spring 64 by the spring force, the inner shaft 12B will be inserted into the input shaft 22 from the right side of Fig. 14 toward the left side.

Then, the wire ring 70 and the inverted concave portion 641 are guided to a chamfered portion formed on an aperture at the side end portion in the rear of the body of the large-diameter hole 53, are reduced in its diameter while elastically deformed, and when the annular groove 44 and the annular groove 54 coincide with each other at positions in an axial direction, the wire ring 70 is enlarged in its diameter while the elastic deformation is returned, and enters a state in which it has engaged with both the annular groove 44 and the annular groove 54. At the same time, the inverted concave portion 641 of the leaf spring 64 is, in its diameter reduced state, fitted into the inverted U-character shaped space 511 to be formed between the narrow projections 481 and the wide grooves 57.

Therefore, since when the inner shaft 12B is completely inserted into the input shaft 22, the wire ring 70 engages with both the annular groove 54 of the input shaft 22 and the annular groove 44 of the inner shaft 12B to regulate relative movement between the inner shaft 12B and the input shaft 22 in the axial direction, there is no possibility that the inner shaft 12B comes off from the input shaft 22.

Since there is a minute clearance in the rotational and radial directions between the wide projection 47 of the inner shaft 12B and the wide groove 57 of the input shaft 22, installation between the inner shaft 12B and the input shaft 22 can be easily performed. Also, although there is a minute clearance between the wide projection 47 and the wide groove 57, since in inverted U-shaped space 511 to be formed between the narrow projection 481 and the wide groove 57, the inverted concave portion 641 of the leaf spring 64 has been fitted in a compressed state, between the inner shaft 12B and the input shaft 22, no looseness occurs in the rotational and radial directions.

The side end portion 50A in the rear of the body formed on the small-diameter hole 50 of the input shaft 22 is inclined toward the right side of Fig. 14 from the inner diameter side toward the outer diameter side. Accordingly, when the inner shaft 12B is completely inserted into the input shaft 22, an end portion on the radial external side of the abutting portion 643 of the leaf spring 64 abuts against the outer diameter side of the side end portion 50A in the rear of the body of the input shaft 22 to elastically become deformed, and gives a biasing force to the inner shaft 12B and the input shaft 22 in directions that cause each of them to space apart from each other in the axial directions.

Since it becomes possible to resolve axial looseness between the inner shaft 12B and the input shaft 22, the steering sensitivity will be improved.

Further, even if there may be eccentricity or inclination between the inner shaft 12B and the input shaft 22, it can be absorbed by the elastic force of the inverted concave portion 641 of the leaf spring 64. When during driving operation, rotating torque is applied between the inner shaft 12B and the input shaft 22 and the rotating torque exceeds the elastic force of the inverted concave portion 641 of the leaf spring 64, the wide projection 47 of the inner shaft 12B and the wide groove 57 of the input shaft 22 abut against each other to transmit the rotating torque.

According to the sixth embodiment, even if the looseness between the inner shaft 12B and the input shaft 22 in the rotational and radial directions may be great, since one piece of the leaf spring 64 is capable of absorbing the looseness, the assembly becomes easier, and it becomes possible to reduce the number of the parts and to reduce the parts fabricating cost and assembly man-hour.

### * Seventh Embodiment

Next, the description will be made of the seventh embodiment of the present invention. Figs. 17(1) and (2) to Fig. 18 (4) show a coupled portion of a steering shaft according to the seventh embodiment of the present invention, Fig. 17 (1) is a longitudinal cross section showing a coupled portion, and Fig. 17 (2) is a cross section taken on line G-G of Fig. 17 (1) . Fig. 18 (1) is a cross section showing the input shaft 22, taken on line G-G of Fig. 17 (1), Fig. 18 (2) is a cross section showing the inner shaft 12B taken on line G-G of Fig. 17 (1), Fig. 18 (3) is a longitudinal cross section showing the leaf spring, and Fig. 18(4) is an arrow view as viewed in the direction of R of Fig. 18 (3). In the following description, only the structural portions and operations different from the above-described embodiments will be described, and repeated description will be omitted.

The seventh embodiment is an example in which the leaf spring has been obtained by integral molding with elastomer material. Since as shown in Figs. 17(1) and (2) to Fig. 18 (4), the shape of the side end portion ahead of the body of the inner shaft 12B and the shape of the side end portion in the rear of the body of the input shaft 22 are quite the same as in the sixth embodiment, the detailed description will be omitted.

In inverted U-shaped space to be formed between the narrow projection 481 of the inner shaft 12B and the wide groove 57 of the input shaft 22, the inverted concave portion 651 of the leaf spring 65 shown in Figs.18(3) and (4) is inserted. The outer width dimension of the inverted concave portion 651 of the leaf spring 65 in the circumferential direction in its free state has been formed to be somewhat larger the width dimension of the inverted U-shaped space in the circumferential direction. Also, the inner width dimension of the inverted concave portion 651 in the circumferential direction in its free state has been formed to be somewhat smaller than the width dimension of the narrow projection 481 in the circumferential direction.

As shown in Figs. 18(3) and (4), a leaf spring 65 according to the seventh embodiment has been integrally formed by injection molding elastomer material such as thermoelastic elastomer with an injection molder. The leaf spring 65 has been formed with a triangle portion 652 formed at the central part, and three extension portions 653 for extending from three places on the outer periphery of this triangle portion 652 outwardly in the radial direction. The outer end of the extension portions 653 in the radial direction extends in the rear of the body (right side of Fig. 18(3)), and the inverted concave portion 651 which has the inverted U-character shape on the shaft center side has been formed.

In a state where an annular wire ring 70 is mounted on the annular groove 44, the leaf spring 65 is inserted into the inner shaft 12B from the front side of the body, and the narrow projection 481 of the inner shaft 12B has been sandwiched with the three inverted concave portions 651 of the leaf spring 65 by the elastic force, the inner shaft 12B will be inserted into the input shaft 22 from the right side toward the left side in Fig. 17.

Then, the wire ring 70 and the inverted concave portion 641 are guided to a chamfered portion formed on an aperture at the side end portion in the rear of the body of the large-diameter hole 53, are reduced in its diameter while elastically deformed, and when the annular groove 44 and the annular groove 54 coincide with each other at positions in an axial direction, the wire ring 70 is enlarged in its diameter while the elastic deformation is returned, and enters a state in which it has engaged with both the annular groove 44 and the annular groove 54. At the same time, the inverted concave portion 651 of the leaf spring 65 is, in a compressed state, fitted into the inverted U-character shaped space to be formed between the narrow projections 481 and the wide grooves 57.

Therefore, since when the inner shaft 12B is completely inserted into the input shaft 22, the wire ring 70 engages with both the annular groove 54 of the input shaft 22 and the annular groove 44 of the inner shaft 12B to regulate relative movement between the inner shaft 12B and the input shaft 22 in the axial direction, there is no possibility that the inner shaft 12B comes off from the input shaft 22.

Since there is a minute clearance in the rotational and radial directions between the wide projection 47 of the inner shaft 12B and the wide groove 57 of the input shaft 22, installation between the inner shaft 12B and the input shaft 22 can be easily performed. Also, although there is a minute clearance between the wide projection 47 and the wide groove 57, since in inverted U-shaped space to be formed between the narrowprojection 4 81 and the wide groove 57 , the inverted concave portion 651 of the leaf spring 65 has been fitted in a compressed state, between the inner shaft 12B and the input shaft 22, no looseness occurs in the rotational and radial directions.

When the inner shaft 12B is completely inserted into the input shaft 22, a triangle portion 652 of the leaf spring 65 and the side end surface ahead of the body of the extension portion 653 abut against the side end portion 50A in the rear of the body of the input shaft 22; are sandwiched between the side end portion 122B ahead of the body of the inner shaft 12B and the side end portion 50A in the rear of the body of the input shaft 22 to be compressed in the axial direction; and give a biasing force to the inner shaft 12B and the input shaft 22 in directions that cause each of them to space apart from each other in the axial directions. Since it becomes possible to resolve axial looseness between the inner shaft 12B and the input shaft 22, the steering sensitivity will be improved.

Further, even if there may be eccentricity or inclination between the inner shaft 12B and the input shaft 22, it can be absorbed by the elastic force of the inverted concave portion 651 of the leaf spring 65. When during driving operation, rotating torque is applied between the inner shaft 12B and the input shaft 22 and the rotating torque exceeds the elastic force of the inverted concave portion 651 of the leaf spring 65, the wide projection 47 of the inner shaft 12B and the wide groove 57 of the input shaft 22 abut against each other to transmit the rotating torque.

According to the seventh embodiment, since it is possible to reduce the vibrations on the wheel side to be transmitted to the steering wheel 11 by the elastic force of the leaf spring 65 made of elastomer material, it becomes comfortable to operate the steering wheel 11. Also, if fluorine coating is given onto the surface of the leaf spring 65 made of elastomer material, it will be preferable because it will become easier to install the leaf spring 65, and the resistance to abrasion of the leaf spring 65 made of elastomer material will be improved.

### * Eighth Embodiment

Next, the description will be made of the eighth embodiment of the present invention. Figs. 19(1) and (2) to Fig. 20 (4) show a coupled portion of a steering shaft according to the eighth embodiment of the present invention, Fig. 19(1) is a longitudinal cross section showing a coupled portion, and Fig. 19 (2) is a cross section taken on line H-H of Fig. 19 (1) . Fig. 20 (1) is a cross section showing the input shaft 22, taken on line H-H of Fig. 19 (1), Fig. 20 (2) is a cross section showing the inner shaft 12B taken on line H-H of Fig. 19 (1), Fig. 20 (3) is a longitudinal cross section showing the leaf spring, and Fig. 20(4) is an arrow view as viewed in the direction of S of Fig. 20 (3) . In the following description, only the structural portions and operations different from the above-described embodiments will be described, and repeated description will be omitted.

The eighth embodiment is an example in which a plate-shaped spring steel has been integrally formed to the leaf spring 65 made of the elastomer material according to the seventh embodiment.

As shown in Figs. 19(1) and (2) to Figs. 20(4), the shape of the side end portion in front of the body of the inner shaft 12B and the shape of the side end portion in the rear of the body of the input shaft 22 are quite the same as the seventh embodiment, the detailed description will be omitted.

In other words, as shown in Figs. 20(3) and 20(4), the leaf spring 66 of the eighth embodiment has been integrally formed by injection molding the elastomer material such as thermoelastic erastomer to the plate-shaped spring steel 661, 662 with an injection molder. On the plate spring 66, the triangle portion 652 made of elastomer material, extension portion 653, the inverted concave portion 651 of the same shape as the plate spring 65 of the seventh embodiment are formed, and on the outer side of the inverted concave portions 651 at the three places, plate-spring steel 661 is integrally formed. Also, on an end surface of the triangle portion 652 and the extension portion 653 on ahead of the body, the plate-shaped spring steel 662 has been integrally formed.

In the eighth embodiment, since the elastic force of the spring steel 661, 662 is added to the elastic force of the elastomer material, the strength of the leaf spring 66 itself is improved, and strength of the leaf spring 66 itself is improved, and handling of the leaf spring 66 is made simple, and installation of the leaf spring becomes easier. Also, since the elastic force of the spring steel 661, 662 is added to the elastic force of the elastomer material, the combination rigidity between the inner shaft 12B and the input shaft 22 in the rotational and radial directions is improved and it becomes possible to further resolve the axial looseness between the inner shaft 12B and the input shaft 22.

### * Ninth Embodiment

Next, the description will be made of the ninth embodiment of the present invention. Figs. 21(1) and (2) to Fig. 22 (4) show a coupled portion of a steering shaft according to the ninth embodiment of the present invention, Fig. 21 (1) is a longitudinal cross section showing a coupled portion, and Fig. 21 (2) is a cross section taken on line I-I of Fig. 21 (1) . Fig. 22 (1) is a cross section showing the input shaft 22, taken on line I-I of Fig. 21 (1), Fig. 22 (2) is a cross section showing the inner shaft 12B taken on line I-I of Fig. 21 (1), Fig. 22 (3) is a longitudinal cross section showing the leaf spring, and Fig. 22(4) is an arrow view as viewed in the direction of T of Fig. 22 (3) . In the following description, only the structural portions and operations different from the above-described embodiments will be described, and repeated description will be omitted.

The ninth embodiment is an example in which in the space of inverted concave portion 641 of the leaf spring 64 made of spring steel according to the sixth embodiment, elastomer material has been integrally formed.

As shown in Figs. 21(1) and (2) to Figs. 22(4), the shape of the side end portion in front of the body of the inner shaft 12B and the shape of the side end portion in the rear of the body of the input shaft 22 are quite the same as the sixth embodiment, the detailed description will be omitted.

In other words, as shown in Figs. 22 (3) and (4), the leaf spring 67 of the ninth embodiment has been integrally formed by a hexagonal-shaped portion 642 made of spring steel, and inverted concave portions 641 at three places, and a trapezoid-shaped abutting portion 643 which have the same shape as a leaf spring 64 according to the sixth embodiment. In the inverted concave-shaped space of the inverted concave portions at three places, an inverted concave elastomer portion 671 has been formed by integrally forming the elastomer material.

In the ninth embodiment, since the elastic force of the inverted concave elastomer portion 671 is added to the elastic force of the inverted concave portion 641 made of spring steel, the combined rigidity between the inner shaft 12B and the input shaft 22 in the rotational and radial directions will be further improved.

### * Tenth Embodiment

Next, the description will be made of the tenth embodiment of the present invention. Fig. 23 is a cross section in which a part of the tenth embodiment of the present invention has been cut, showing a coupled portion between the motor shaft and the worm shaft of an assist device. Fig. 24 (1) is a cross section taken on line J-J of Fig. 23, Fig. 24(2) is a cross section showing the worm shaft, taken on line J-J of Fig. 23, Fig. 24(3) is a cross section showing the worm shaft taken on line J-J of Fig. 23, and Fig. 24 (3) is a cross section showing the motor shaft taken on line J-J of Fig. 23. In the following description, only the structural portions and operations different from the above-described embodiments will be described, and repeated description will be omitted.

The tenth embodiment is an example applied to a coupled portion applied to the motor shaft (upper steering shaft) of the assist device and the worm shaft (lower steering shaft). As shown in Fig. 23, the worm shaft 271 having a worm 27 in the intermediate portion is rotatively supported by a gear housing 21 by bearings 272, 273 on a gear housing 21, and a worm 27 engages with a worm wheel 25 rotatively supported by the gear housing 21, and constitute a speed reduction mechanism. The motor shaft 262 of an electric motor 26 mounted to the gear housing 21 is connected to the right end of the worm shaft 271, and to transmit the rotations of the electric motor 26 to the worm shaft 271.

As shown in Fig. 24 (3), the motor shaft 262 has been formed in the solid columnar shape, and from the left end of Fig. 23, a small-diameter shaft portion 46 having diameter dimension of d3 and a large-diameter shaft portion 43 having diameter dimension of d2 have been formed.

On the outer periphery of the small-diameter shaft portion 46, three wide projections 47 each having a trapezoid in cross section perpendicular to the shaft, three narrow projections 481 each having a trapezoid in cross section perpendicular to the shaft over actual direction of the small-diameter shaft portion 46 at regular intervals (60° intervals). The apexes of three wide projections 47 are somewhat inwardly of the large-diameter shaft portion 43 having a diameter dimension of d2, and apexes of three narrow projections 481 are formed within the apexes of the three wide projections 47.

The right end portion of the worm shaft 271 has been formed into a hollow cylindrical shape, and from the right end portion, a large-diameter bore of diameter dimension of D2 and a small-diameter bore of diameter dimension of D3 are formed in this order. On the inner periphery of the small-diameter hole 56, six wide grooves 57 each having a trapezoid in cross section perpendicular to the shaft over actual direction of the small-diameter shaft portion 46 at regular intervals (60° intervals) are formed. The apexes of the six wide grooves 57 are on the same circumference as the large-diameter 53 having a diameter dimension of D2, and the circumference of the large-diameter hole 53 is a circumscribed circle of six wide grooves 57.

The diameter dimension d3 of the small-diameter shaft portion 46 of the motor shaft 262 is formed to be somewhat smaller than the diameter dimension D3 of the small-diameter hole 56 of the worm shaft 371, and the diameter dimension d2 of the large-diameter shaft portion 43 is formed to be somewhat smaller than the diameter dimension D2 of the large-diameter hole 53. Further, the width of the wide groove 57 in the circumferential direction has been formed to be somewhat smaller than the width of the wide projection 47 in the circumferential direction. Thereby, the motor shaft 262 is smoothly fitted into the worm shaft 271.

In the inverted U-character shaped space to be formed the narrow projection 481 of the motor shaft 262 and the wide projection 57 of the worm shaft 271, the inverted concave portion 651 of the leaf spring 65 made of elastomer material in Figs. 18(3) and (4) explained in the above-described embodiment is inserted. The outer width dimension of the inverted concave portion 651 of the leaf spring 65 in the circumferential direction in its free state has been formed to be somewhat narrow than the width dimension of the circumferential direction of the narrow projection 481.

Since the leaf spring 65 has the quite same shape as the leaf spring 65 of the seventh embodiment, the detailed description of the shape and the installing method to the motor shaft 262 are omitted.

When the motor shaft 262 is completely inserted into the worm shaft 271, between the wide projection 47 of the motor shaft 262 and the wide groove 57 of the worm shaft 271, there is a minute clearance in the rotational and radial directions, and therefore, the assembly between the motor shaft 262 and the worm shaft 271 can be performed easily. Also, although there is a minute clearance between the wide projection 47 and the wide groove 57, in the inverted U-character shaped space to be formed with the narrow projection 481 and the wide groove 57, the inverted concave portion 651 of the leaf spring 65 has been fitted in a compressed state, between the motor shaft 262 and the wormed shaft 271, no looseness occurs in the rotational and radial directions.

Further, when in order to remove the back lash between the worm 27 and the worm wheel 25, the center distance between the worm 27 and the worm wheel 25 is adjusted, eccentricity or inclination occurs between the motor shaft 262 and the worm shaft 271. However, by the elastic force of inverted concave shaped 651 of the leaf spring 65, the eccentricity or inclination can be absorbed. However, the elastic force of the inverted concave shaped portion 651 of the leaf spring 65 can absorb the eccentricity or inclination. During the operation of the electric motor 26, the rotating torque is applied between the motor shaft 262 and the worm shaft 271 and when the rotating torque exceeds the elastic force of the inverted concave shaped portion 651 of the leaf spring 65, the wide projection 47 of the motor shaft 262 and the wide groove 57 of the worm shaft 271 abut against to transmit the rotating torque.

In the tenth embodiment, as means for connecting the motor shaft 262 to the worm shaft 271, a conventional power transmission joint is not used, and the installation dimension of the electric motor 26 as an axial direction is abridged and is advantageous when installed in a narrow vehicle. In the tenth embodiment, the leaf spring 65 made of elastomer material explained in the seventh embodiment is used, and the leaf spring 66, 67 made of compound material of spring steel and elastomer material, explained in the eighth and ninth embodiments. Also, hollow cylindrical shaped spring 60 or leaf spring 63, 64 made of spring steel explained in the first embodiment to the sixth embodiment may be used.

### * Eleventh Embodiment

Next, the description will be made of the eleventh embodiment of the present invention. Fig. 25 is a longitudinal cross section showing the assist device of the eleventh embodiment of the present invention before installed. Fig. 27 (1) is a cross section taken on line K-K of Fig. 26, Fig. 27 (2) is a cross section taken on line K-K of Fig. 26 for worm wheel, and Fig. 27(3) is a cross section taken on line K-K of Fig. 26 showing the pinion shaft. In the following explanation, only the structural portion and the operation different from the above embodiment will be described and inscription to be repeated will be omitted.

The eleventh embodiment is an emblem applied to a coupled portion between the worm wheel (upper steering shaft) and the pinion shaft (lower side steering shaft) of the assist device, and the assist device shown in Fig. 25 to Fig. 27 is a pinion assist type electric type power steering device.

That is, the assist device 8 is comprised of two units : upper steering auxiliary portion assembly 81 in which worm decelerating mechanism such as the worm 83 or the worm wheel 84 has been incorporated, and lower rack and pinion assembly 82 the rack 85 and the pinion 86 have been incorporated, and these two units are assembled and after their performances are confirmed, are integrally combined.

In the gear housing 811 of the steering auxiliary portion assembly 81, the input shaft 87 is rotatively by the ball bearing 812 by a shaft. The input shaft 87 is supported by a steering shaft not shown to a steering wheel. The top end of the torsion bar 872 has been coupled to the input shaft 87 with the pin 871, and the bottom end thereof has been press-fitted into the upper end portion of the worm wheel 84.

A torque sensor 873 for detecting torque exerted on the torsion bar 872 is installed between the lower end of the input shaft 87 and the gear housing 811. When the steering wheel is operated and the input shaft 87 is rotated, the rotating force is transmitted to the worm wheel via the torsion bar 872. At this time, by the steering wheel side resistance, torsion occurs on the torsion bar 872 for coupling the input shaft 872 and the worm wheel 84, and the torque sensor 873 detects this torsion as a change in inductance.

From this detection result, a torque operating on the torsion bar 872 is detected, an electric motor 813 is driven and the worm 83 is rotated by required steering auxiliary force. The rotation of the worm 83 is transmitted to the rack 85 via the worm wheel 84, the pinion shaft 861 and the pinion 86, and the turning of the steering wheel is changed via the tie rod, not shown, coupled to the rack 85.

The upper end and lower end of the boss portion 841 of the worm wheel 84 engaging with the worm 83 of the worm decelerating mechanism is rotatively by the gear housing 811 and cover 816 and by the bearing 814, 815 with the axial movement prevented and be rotatively supported by the bearing.

The cover 816 for holding the bearing 815 at the lower end is formed with an internal thread 817, and the male type connector 8181 of the bolt 818 is screwed in by the internal thread 817, and integrally fixes the cover 816 to the gear housing 811. Therefore, the steering auxiliary portion assembly 81 is assembled as a complete unit, and it is possible to measure the value of the steering auxiliary torque and the performance of the frictional coefficient single.

The top end of the pinion shaft 861 in which the pinion 86 has been molded is the rack housing 821 of the rack pinion assembly 82 supported by the ball bearing 822. The rivet ring 8612 which has been mounted on the ring groove 8611 of the pinion shaft 861 and riveted has sandwiched the inner ring of the ball bearing 822 in stepped portions of the pinion shaft 861. Also, the outer race of the ball bearing 822 is sandwiched between stepped portions of the pinion shaft 861. Also, the outer race of the ball bearing 822 is pressed in by a bearing hole 823 formed on the rack housing 821, and is pressed by a ring nut 825 threadedly engaged with the female screw 824 of this bearing hole 823, and has been fixed to the rack housing 821.

The lower end portion of the pinion shaft 861 is supported only in the radial direction in the radial housing 821 in the needle bearing 826. Thus, the pinion shaft 861 is rotatably by the ball bearing 822 and with the axial direction movement prevented for rotation. Therefore, the rack pinion assembly 82 is as one completely unit assembled, and it is possible to adjust the adjustment and measure frictional coefficient and the like single.

On the back surface of the rack 85 to mesh with the pinion 86, the roller 851 is always pressed by the adjust cover 852. The roller 851 is rotatably pressed to the shaft 853 by the needle valve 854. The adjust cover 851 is rotatively pressed by the needle cover 854. The adjust cover 852 is pressing the roller 851 to the back surface of the rack 85 via coil spring. Thereby, it eliminates the backlash in the meshed portion between the pinion 86 and the rack 85, and the rack 85 is going to move smoothly.

The steering auxiliary portion assembly 81 and the rack pinion assembly 82 are combined by fitting the male fitted-in portion 827 formed on the top end of the rack housing 821 in the female fitted-in portion 819 formed on the bottom end of the cover 816 and screwing a nut 828 in a male screw 8181 at the lower end of the bolt 818.

As shown in Fig. 27(3), the top end portion of the pinion shaft 861 is formed in solid columnar shape, and from the top end of Fig. 25, a small-diameter shaft portion having a diameter dimension of d3 and a large-diameter shaft portion having a diameter dimension of d2 have been formed in this order.

On the outer periphery of the small-diameter shaft portion 46, three wide projections 47, each having a trapezoid in cross section perpendicular to the shaft, three narrow projections 481 each having a trapezoid in cross section perpendicular to the shaft over actual direction of the small-diameter shaft portion 46 at regular intervals (60° intervals) . The apexes of three wide projections 47 are located somewhat inwardly of the large-diameter shaft portion 43 having a diameter dimension of d2, and the apexes of three narrow projections 481 are formed inwardly the apexes of three wide projections.

The lower end portion of the boss portion 841 of the worm wheel 84 is formed into a hollow cylindrical shape, and from the lower end, a large-diameter hole 53 having a diameter dimension of D2 and a small-diameter hole 56 having a diameter dimension of D3 have been formed in this order. On the inner periphery of the small diameter hole 56, the wide groove 57 each having a trapezoid in a cross section perpendicular to the shaft, wide groove 57 are formed six at regular intervals (60° intervals). The apexes of six wide grooves 57 are on the same circumference the large-diameter hole 53 having diameter dimension of D2, and the circumference of the large-diameter hole 53 is a circumscribed circle of six wide grooves 57.

The diameter dimension d3 of the small-diameter shaft portion 46 of the pinion shaft 861 is formed to be somewhat smaller than diameter dimension D3 of the small-diameter hole 56 of the boss portion 841, and the diameter dimension d2 of thelarge-diameter shaft portion 43 has been formed to be somewhat smaller than diameter dimension D2 of the large diameter hole 53. Further, the width of the wide groove 57 in the circumferential direction is formed to be somewhat smaller than the diameter dimension of the wide projection 47 in the circumferential direction.Thereby,when combining the steering auxiliary portion assembly 81 and the rack and pinion assembly 82, the pinion shaft 861 is smoothly fitted in the boss portion 841 of the worm wheel 84.

In the inverted U-character shape to be formed between the narrow projection 481 of the pinion shaft 861 and the wide groove 57 of the boss portion 841, the inverted concave portion 651 of the leaf spring 65 made of elastomer material in Fig. 18 (3) and (4) explained in the seventh embodiment is inserted. The outer width dimension of the inverted concave portion 651 of the leaf spring 65 of the width dimension in free state is formed to be somewhat larger than the inverted U-character shaped space. Also, the inner width dimension of the inverted concave portion 651 in its free state in circumferential direction has been formed to be somewhat narrower than the width dimension of the narrow projection 481 in the circumferential direction.

Since the leaf spring 65 has quite the same shape as the leaf spring 65 of the seventh embodiment, the detailed description of the shape and the installation method to the pinion shaft 861 will be omitted.

Therefore, when the pinion shaft 861 is perfectly inserted into the boss portion 841, since there is a minute clearance between the wide stroke 47 of the pinion shaft 861 and the wide stroke 57 of the boss portion 841 in rotational and rotational directions, installation between the pinion shaft 861 and the boss portion 841 can be easily performed. Also, between the wide clearance 47 and the wide groove 57, there is a minute clearance, and in the inverted U-character shaped space to be formed between the narrow projection 481 and the wide groove 57, the inverted concave portion 651 of the leaf spring 65 is fitted in a compressed state. Therefore, between the pinion shaft 861 and the boss portion 841, no looseness in rotational and radial directions occurs, and abnormal sound can be prevented.

Further, even if there may be eccentricity and inclination between pinion shaft 861 and boss portion 841, it can be absorbed by the elastic force of the inverted concave portion 651 of the leaf spring 65. During the operation of the electric motor 813, the rotating torque is applied to between the pinion shaft 861 and the boss portion 841 and when the rotating torque exceeds the elastic torque of the inverted concave shaped portion 651 of the leaf spring 65, the wide projection 47 of the pinion shaft 861 and the wide groove 57 of the boss portion 841 abut against and transmits the rotating torque.

In the eleventh embodiment, the leaf spring 65 made of the elastomer material explained in the seventh embodiment has been used, but the leaf spring 66, 67 made by compoundmaterial of spring steel and elastomer material explained in the eighth and ninth embodiments may be used. Also, hollow cylindrical shape spring 60 made of spring steel or the leaf spring 63, 64 made of spring steel explained in first to sixth embodiments may be used.

In the above-described embodiments, the upper inner shaft 12B is in a male and the lower input shaft 22 is fitted in a female; however, the upper inner shaft 12B may be as a female, and the lower input shaft 22 may be fitted in as a male. Also, in the above-described states, examples applied to, the coupled portion between the steering shaft and steering auxiliary portion, the coupled portion between the worm wheel of the steering auxiliary portion and the pinion shaft, and coupled portion between the motor shaft and the worm shaft, have been explained, and it can be applied to the coupled portion of a shaft at any position constituting the steering device.

Although only preferred embodiments are specifically illustrated and described herein, it will be appreciated that many modifications and variations of the present invention are possible in light of the above teachings and within the purview of the appended claims without departing from the spirit and intended scope of the invention.

## Claims

1. A steering device comprising:
an upper steering shaft;
a lower steering shaft for transmitting rotations of said upper steering shaft to a steering gear;
an engaging projection provided on either of fitted-in portions between said upper steering shaft and said lower steering shaft;
an engaging groove, provided on any other fitted-in portion between said upper steering shaft and said lower steering shaft, for engaging with said engaging projection with a clearance of a rotational direction; and
a rotational direction biasing member, provided on said fitted-in portion, for giving a biasing force of a rotational direction between said upper steering shaft and said lower steering shaft.

2. A steering device according to Claim 1,
wherein said engaging groove engages with said engaging projection further with a clearance in a radial direction; and
wherein said rotational direction biasing member further gives a biasing force in a radial direction between said upper steering shaft and said lower steering shaft.

3. A steering device according to Claim 1 or 2, wherein a plurality of said engaging projections are provided on the circumference of said fitted-in portion.

4. A steering device comprising:
an upper steering shaft;
a lower steering shaft for transmitting rotations of said upper steering shaft to a steering gear;
engaging grooves provided on both said upper steering shaft and said lower steering shaft on fitted-in portions between said upper steering shaft and said lower steering shaft;
a rotating torque transmission member inserted to extend over said both engaging grooves, for engaging with said engaging grooves with a clearance in a rotational direction; and
a rotational direction biasing member provided on said fitted-in portion, for giving a biasing force of a rotational direction between said upper steering shaft and said lower steering shaft.

5. A steering device according to Claim 4,
wherein said rotating torque transmission member further engages with said engaging grooves with a clearance in a radial direction; and
wherein said rotational direction biasing member further gives a biasing force in a radial direction between said upper steering shaft and said lower steering shaft.

6. A steering device according to Claim 4 or 5, wherein a plurality of said rotating torque transmission members are provided on the circumference of said fitted-in portion.

7. A steering device according to Claim 4 or 5, wherein said rotating torque transmission members are either pins or spheres.

8. A steering device according to Claim 1, 2, 4, or 5 comprising: an axial direction biasing member provided on fitted-in portions between said upper steering shaft and said lower steering shaft, for giving a biasing force in an axial direction between said upper steering shaft and said lower steering shaft.

9. A steering device according to Claim 1, 2, 4 or 5, wherein said lower steering shaft is the input shaft of a steering auxiliary portion for giving a steering auxiliary force proportional to steering wheel torque of the steering wheel.

10. A steering device according to Claim 1, 2, 4 or 5 comprising a movement regulating member, provided on a fitted-in portion between said upper steering shaft and said lower steering shaft, for regulating relative movement in an axial direction between said upper steering shaft and said lower steering shaft.

11. A steering device according to Claim 10, wherein said movement regulating member has:
annular grooves provided on both said upper steering shaft and said lower steering shaft in said fitted-in portion; and
an annular regulating member for engaging with said both annular grooves to regulate relative movement in an axial direction between said upper steering shaft and said lower steering shaft.

12. A steering device according to Claim 11, wherein said annular regulating member is either a wire ring or an O-ring.

13. A steering device comprising:
a motor shaft for generating auxiliary steering wheel torque corresponding to the steering wheel torque;
a worm shaft for reducing rotations of said motor shaft to transmit to the steering gear;
an engaging projection provided on either of fitted-in portions between said motor shaft and said worm shaft;
an engaging groove provided on any other fitted-in portion between said motor shaft and said worm shaft, for engaging with said engaging projection with a clearance of a rotational direction; and
a rotational direction biasing member provided on said fitted-in portion for giving a biasing force of a rotational direction between said motor shaft and said worm shaft.

14. A steering device comprising:
a motor shaft for generating auxiliary steering wheel torque corresponding to the steering wheel torque;
a worm wheel for reducing rotations of said motor shaft for transmission;
a pinion shaft for transmitting rotations of said worm wheel to a rack;
an engaging projection provided on either of fitted-in portions between said worm wheel and said pinion shaft;
an engaging groove provided on any other fitted-in portion between said worm wheel and said pinion shaft, for engaging with said engaging projection with a clearance of a rotational direction; and
a rotational direction biasing member provided on said fitted-in portion, for giving a biasing force of a rotational direction between said worm wheel and said pinion shaft.

15. A steering device according to Claim 1, 2, 4, 5, 13 or 14, wherein a plurality of said rotational direction biasing members are provided on the circumference of said fitted-in portion.

16. A steering device according to Claim 15, wherein said rotational direction biasing member is constructed of a plurality of hollow cylindrical springs.

17. A steering device according to Claim 15, wherein said rotational direction biasing member is constructed of a piece of leaf spring.

18. A steering device according to Claim 17, wherein said one piece of leaf spring is used as both a biasing member in the axial direction for giving the biasing force in said axial direction and a movement regulating member for regulating the movement in said axial direction.

19. A steering device according to Claim 17, wherein said one piece of leaf spring has been molded using elastomer material.

20. A steering device according to Claim 17, wherein said one piece of leaf spring has been obtained by integral molding of spring steel and elastomer material.
